# EUROPÄISCHE PATENTANMELDUNG

(11) **EP 4 624 013 A2**
(43) Veröffentlichungstag der Anmeldung: **01.10.2025**
(21) Anmeldenummer: 25190636.8
(22) Anmeldetag: 25.05.2023
(51) Int. Cl.: A63H 3/28

(54) **SPIELZEUG ZUR WIEDERGABE VON MUSIK ODER EINER GESPROCHENEN GESCHICHTE**

(30) Priorität: 25.05.2022 EP 22175526
(62) Teilanmeldung aus: 23728749.5
(71) Anmelder: tonies GmbH, 40210 Düsseldorf (DE)
(72) Erfinder: Faßbender, Patric, Düsseldorf (DE); Stahl, Marcus, Düsseldorf (DE); Wilmanns, Christian, Kaarst (DE); Vaders, Sven, Düsseldorf (DE); Salomon, Roman, Ratingen (DE)
(74) Vertreter: Hoffmann Eitle

(57) **Zusammenfassung**

Die Erfindung betrifft ein Spielzeug zur Wiedergabe von Musik oder einer gesprochenen Geschichte mit einem Lautsprecher und/oder einem Lautsprecheranschluss, einem ersten Sensor, der innerhalb eines Bereichs seiner Umgebung eine Eigenschaft oder eine Änderung einer Eigenschaft dieser Umgebung feststellen kann, wobei der erste Sensor ein Lesegerät zum Kommunizieren mit einem passiven RFID-Transponders und/oder zum Kommunizieren mit einem aktiven RFID-Transponder ist, und einer Kontrolleinheit, die den Lautsprecher oder den Lautsprecheranschluss zur Wiedergabe von Musik oder einer gesprochenen Geschichte ansteuern kann, wenn der erste Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem ersten Sensor festgestellten Eigenschaft feststellt, wobei ein zweiter Sensor die Richtung eines auf den zweiten Sensor wirkenden Magnetfelds relativ zu einer Vorzugsrichtung bestimmen kann.

## Beschreibung

Die Erfindung betrifft ein Spielzeug zur Wiedergabe von Musik oder einer gesprochenen Geschichte. Ferner betrifft die Erfindung ein System aus einem solchen Spielzeug und einem Magnetträger.

Aus WO 2015/104222 A1 ist ein Spielzeug zur Wiedergabe von Musik oder einer gesprochenen Geschichte bekannt. Das dort beschriebene Spielzeug weist einen Lautsprecher oder einen Lautsprecheranschluss auf. Ferner weist das dort beschriebene Spielzeug einen Sensor auf, der innerhalb eines Bereichs seiner Umgebung eine Eigenschaft oder eine Änderung einer Eigenschaft dieser Umgebung feststellen kann, wobei dieser Sensor ein Lesegerät zum Kommunizieren mit einem passiven RFID-Transponder und/oder zum Kommunizieren mit einem aktiven RFID-Transponder sein kann. Das dort beschriebene Spielzeug weist ferner eine Kontrolleinheit auf, die den Lautsprecher oder den Lautsprecheranschluss zur Wiedergabe von Musik oder einer gesprochenen Geschichte ansteuern kann, wenn der erste Sensor innerhalb des Bereichs seiner Umgebung eine bestimmte Eigenschaft oder eine bestimmte Änderung einer Eigenschaft dieser Umgebung feststellt oder wenn die Kontrolleinheit eine bestimmte Änderung der von dem ersten Sensor festgestellten Eigenschaft feststellt. In den dort beschriebenen bevorzugten Ausführungsformen kann das Spielzeug auch einen Näherungssensor, einen Bewegungssensor (Beschleunigungssensor), einen Sensor für Umgebungslicht, einen Feuchtigkeitssensor, einen Neigungssensor, einen GPS-Sensor und/oder einen gyroskopischen Sensor aufweisen. Insbesondere wird in WO 2015/104222 A1 die Möglichkeit beschrieben, mit derartigen Sensoren weitere Bedienbefehle für die Kontrolleinheit zu erzeugen. So wird dort vorgeschlagen, dass ein Schütteln erkannt werden kann und daraus ein Bediensignal für die Kontrolleinheit erzeugt werden kann. Das Schütteln der Vorrichtung kann dazu eingesetzt werden, Daten verschiedener Audioinformationen in zufälliger Reihenfolge wiederzugeben. Ebenso kann eine derart ausgebildete Vorrichtung erkennen, ob von links oder von rechts ein leichter Schlag auf die Vorrichtung ausgeübt wird. Dies kann beispielsweise dazu eingesetzt werden, innerhalb eines Datensatzes zu dem nächsten Kapitel oder zu einem vorherigen Kapitel zu springen. Ebenso kann nach den Vorschlägen der WO 2015/104222 A1 eine derartig ausgestaltete Vorrichtung erkennen, ob sie geworfen wird und hieraus ein Bediensignal erzeugen. Ebenso wird in WO 2015/104222 A1 beschrieben, dass eine derart ausgestattete Vorrichtung erkennen kann, ob sie vertikal gekippt wird oder ob sie horizontal gekippt wird. Auch diese Signale können nach den Vorschlägen der WO 2015/104222 A1 zum Erzeugen von Bediensignalen für die Kontrolleinheit eingesetzt werden. So wird dort vorgeschlagen, dass ein vertikales Kippen zu einem Navigieren innerhalb einer Wiedergabeliste eingesetzt werden kann, während ein horizontales Kippen einen Wechsel zwischen Applikationen ermöglicht.

Trotz der vielfältigen Weiterbildungsmöglichkeiten, die in WO 2015/104222 A1 beschrieben wird, hat sich bei Spielzeugen der in WO 2015/104222 A1 näher beschriebenen Art das Bedürfnis herausgestellt, die bereits bekannten Bedienkonzepte durch ein Bedienkonzept zu ergänzen, das ohne Veränderung der Position des Spielzeugs, also ohne Kippen des Spielzeugs oder ohne ein Klopfen auf das Spielzeug, realisiert werden kann. Ferner besteht ein Bedürfnis an einem Bedienkonzept, das nur in bestimmten Betriebssituationen zur Verfügung steht und in anderen Betriebssituationen nicht zur Verfügung steht.

Dieses Problem wird durch das Spielzeug gemäß Anspruch 1 und das System gemäß Anspruch 9 sowie durch das Verfahren gemäß Anspruch 13 sowie die Verwendung gemäß Anspruch 15 gelöst. Vorteilhafte Ausführungsformen sind in den Unteransprüchen und der hier nachfolgenden Beschreibung wiedergegeben.

Die Erfindung geht von dem Grundgedanken aus, das Spielzeug neben einem aus dem Stand der Technik bekannten, ersten Sensor, der ein Lesegerät zum Kommunizieren mit einem passiven RFID-Transponder und/oder zum Kommunizieren mit einem aktiven RFID-Transponder ist, mit einem weiteren, zweiten Sensor auszustatten, der die Richtung eines auf den zweiten Sensor wirkenden Magnetfelds relativ zu einer Vorzugsrichtung bestimmen kann. Durch diese Weiterbildung des aus dem Stand der Technik bekannten Spielzeugs wird die Möglichkeit geschaffen, mit einem von außen an das Spielzeug herangetragenen Magneten auf den zweiten Sensor einzuwirken und durch die Wahl einer bestimmten Lage des Magneten relativ zum Spielzeug den zweiten Sensor dazu zu veranlassen, ein Signal zu erzeugen, das von der Lage des Magneten relativ zu einer Vorzugsrichtung abhängt. Ein solches von dem zweiten Sensor erzeugtes Signal kann zur Steuerung der Kontrolleinheit eingesetzt werden.

In einer bevorzugten Ausführungsform ist der zweite Sensor dazu ausgeführt, nur die Richtung eines auf ihn wirkenden Magnetfelds zu bestimmen, das in dem zweiten Sensor eine Magnetfeldstärke hat, die oberhalb der Magnetfeldstärke des Erdmagnetfelds liegt. Dabei wird davon ausgegangen, dass das Erdmagnetfeld am Äquator eine Magnetfeldstärke von ca. 30 Mikrotesla (µT) aufweist und an den Polen einen in etwa doppelt so großen Betrag (ca. 60 µT), während in Mitteleuropa etwa 48 µT anliegen. Um nicht von dem Erdmagnetfeld beeinträchtigt zu werden, ist der zweite Sensor insbesondere bevorzugt derart ausgestaltet, dass er nur für solche Magnetfelder die Richtung des auf ihn wirkenden Magnetfelds relativ zu einer Vorzugsrichtung bestimmen kann, wenn dieses Magnetfeld eine Größe von mehr als 100 µT, vorzugsweise von mehr als 1000 µT, vorzugsweise von mehr als 0,01 T hat. Die erfindungsgemäße Weiterbildung des aus dem Stand der Technik bekannten Spielzeugs dient mithin nicht der Bestimmung der Richtung des Erdmagnetfelds relativ zu einer Vorzugsrichtung, sondern zu der Bestimmung eines in die Nähe des Spielzeugs verbrachten Magneten, der ein erkennbar stärkeres Magnetfeld als das Erdmagnetfeld erzeugt.

In einer bevorzugten Ausführungsform ist der zweite Sensor ein Hall-Sensor. Aus der Bauform des Hall-Sensor ergibt sich typischerweise die Vorzugsrichtung. Insbesondere bevorzugt weist der Hall-Sensor ein Gehäuse auf, das mit einer Platine verbunden werden kann. Der Hall-Sensor liefert ein Signal, das davon abhängt, wie ein von außen auf ihn wirkendes Magnetfeld relativ zum Gehäuse orientiert ist. Wird das Gehäuse des Hall-Sensor mithin ortsfest im Spielzeug verbaut, beispielsweise eine Platine, auf der der Hall-Sensor ortsfest verbaut ist, ortsfest im Spielzeug verbaut, so kann der Hall-Sensor ein Signal liefern, dass davon abhängt, wie ein von außen auf ihn wirkendes Magnetfeld relativ zum Spielzeug orientiert ist.

In einer bevorzugten Ausführungsform weist das Spielzeug eine Auflage auf. In einer bevorzugten Ausführungsform bildet die nach außen weisende Oberfläche der Auflage einen Teil der Außenoberfläche des Spielzeugs. In einer bevorzugten Ausführungsform unterscheidet sich die nach außen weisende Oberfläche der Auflage von die Auflage umgebenden weiteren Oberflächen des Spielzeugs. In einer bevorzugten Ausführungsform wird die Auflage aus einem anderen Material hergestellt als Materialien, die dazu eingesetzt werden, die die Auflage umgebenden Oberflächenabschnitte des Spielzeugs bereitzustellen. Beispielsweise ist eine bevorzugte Ausführungsform denkbar, bei der das Spielzeug eine Außenummantelung aus Schaumstoff aufweist, wobei der Schaumstoff wiederum durch eine Außenhaut ummantelt ist, wobei die Außenhaut Leder oder Kunstleder oder ein weicher Kunststoffmantel ist, während die Auflage durch einen festen Kunststoff gebildet wird, wobei die Auflage vorzugsweise in eine Ausnehmung in dem Schaumstoff eingesetzt wird. Durch die unterschiedliche Gestaltung der Auflage von den sie umgebenden anderen Oberflächenabschnitten des Spielzeugs kann die Auflage für den Bediener hervorgehoben werden. Durch diese unterschiedliche Gestaltung wird dem Bediener deutlich, wo sich die Auflage befindet. Die Auflage kann in anderen Ausführungsformen auch durch eine unterschiedliche Oberflächenstruktur im Verhältnis zur sie umgebenden Oberflächenabschnitten, beispielsweise durch eine raue Oberflächenstruktur, wenn die sie umgebenden Oberflächenabschnitte glatt sind, oder durch eine glatte Oberflächenstruktur, wenn die sie umgebenden Oberflächenabschnitte rau sind, hervorgehoben werden. Ebenso ist es denkbar, die Auflage durch eine Farbgebung hervorzuheben. Die Auflage kann auch durch die Formgebung der sie umgebenden Oberflächenabschnitte des Spielzeugs sichtbar gemacht werden, beispielsweise indem die Auflage Teil einer Mulde ist, beispielsweise die Auflage die Grundfläche einer Mulde ist.

In einer bevorzugten Ausführungsform ist der zweite Sensor unterhalb der Auflage angeordnet. In einer bevorzugten Ausführungsform wird die Auflage durch eine nach außen weisende Oberfläche eines plattenartigen Körpers gebildet, wobei der zweite Sensor an dem plattenartigen Körper befestigt ist. In einer alternativen Ausführungsform ist unterhalb der Auflage eine Leiterplatte (eine Platine, eine gedruckte Schaltung, ein "Printed Circuit Board" (PCB)) vorgesehen, wobei der zweite Sensor auf dieser Leiterplatte angeordnet ist.

In einer bevorzugten Ausführungsform ist zumindest ein Teil des ersten Sensors unterhalb der Auflage angeordnet. In einer bevorzugten Ausführungsform wird die Auflage durch eine nach außen weisende Oberfläche eines plattenartigen Körpers gebildet, wobei zumindest ein Teil des ersten Sensors an dem plattenartigen Körper befestigt ist. In einer alternativen Ausführungsform ist unterhalb der Auflage eine Leiterplatte (eine Platine, eine gedruckte Schaltung, ein "Printed Circuit Board" (PCB)) vorgesehen, wobei zumindest ein Teil des ersten Sensors auf dieser Leiterplatte angeordnet ist.

In einer bevorzugten Ausführungsform weist der erste Sensor eine Antenne und eine mit der Antenne verbundene Auswerteeinheit auf. In einer bevorzugten Ausführungsform ist die Auswerteeinheit des ersten Sensors unterhalb der Auflage angeordnet. In einer bevorzugten Ausführungsform wird die Auflage durch eine nach außen weisende Oberfläche eines plattenartigen Körpers gebildet, wobei in dieser bevorzugten Ausführungsform die Auswerteeinheit des ersten Sensors an dem plattenartigen Körper befestigt ist. In einer alternativen Ausführungsform ist unterhalb der Auflage eine Leiterplatte (eine Platine, eine gedruckte Schaltung, ein "Printed Circuit Board" (PCB)) vorgesehen, wobei die Auswerteeinheit des ersten Sensors auf dieser Leiterplatte angeordnet ist. In einer bevorzugten Ausführungsform ist die Antenne des ersten Sensors an dem plattenartigen Körper vorgesehen und die Auswerteeinheit des ersten Sensors auf einer unterhalb des plattenartigen Körpers vorgesehenen Leiterplatte angeordnet, wobei die Antenne insbesondere bevorzugt zumindest teilweise um die Auflage umlaufend, vorzugsweise gänzlich um die Auflage umlaufend an dem plattenartigen Körper vorgesehen ist.

In einer bevorzugten Ausführungsform ist unterhalb der Auflage eine Leiterplatte (eine Platine, eine gedruckte Schaltung, ein "Printed Circuit Board" (PCB)) vorgesehen, wobei der erste Sensor und der zweite Sensor und vorzugsweise der erste Sensor und der zweite Sensor und die Kontrolleinheit auf dieser Leiterplatte angeordnet sind. In einer alternativen, ebenfalls bevorzugten Ausführungsform ist
- unterhalb der Auflage eine erste Leiterplatte (eine Platine, eine gedruckte Schaltung, ein "Printed Circuit Board" (PCB)) vorgesehen, wobei zumindest ein Teil des ersten Sensors, vorzugsweise eine Auswerteeinheit eines eine Antenne und eine Auswerteeinheit aufweisenden ersten Sensors, auf der ersten Leiterplatte angeordnet ist und
- unterhalb der Auflage eine zweite Leiterplatte (eine Platine, eine gedruckte Schaltung, ein "Printed Circuit Board" (PCB)) vorgesehen ist, wobei der zweite Sensor auf der zweiten Leiterplatte angeordnet ist.

In einer bevorzugten Ausführungsform ist die zweite Leiterplatte näher zur Auflage angeordnet als die erste Leiterplatte. In einer bevorzugten Ausführungsform ist die erste Leiterplatte in einem Winkel zur zweiten Leiterplatte angeordnet, vorzugsweise in einem Winkel zwischen 75° und 105°, vorzugsweise senkrecht. In einer bevorzugen Ausführungsform wird die Auflage durch eine nach außen weisende Oberfläche eines plattenartigen Körpers gebildet, wobei die zweite Leiterplatte parallel zur nach außen weisenden Oberfläche des plattenartigen Körpers verläuft und die erste Leiterplatte in einem Winkel zwischen 75° und 105°, vorzugsweise senkrecht zur nach außen weisenden Oberfläche des plattenartigen Körpers verläuft.

In einer bevorzugten Ausführungsform ist die Kontrolleinheit auf der Leiterplatte (eine Platine, eine gedruckte Schaltung, ein "Printed Circuit Board" (PCB)) vorgesehen, auf der auch zumindest ein Teil des ersten Sensors, vorzugsweise eine Auswerteeinheit eines eine Antenne und eine Auswerteeinheit aufweisenden ersten Sensors vorgesehen ist. Vorzugsweise ist die Kontrolleinheit auf der ersten Leiterplatte angeordnet ist.

In einer bevorzugten Ausführungsform weist das Spielzeug eine Kopfplatte auf. In einer bevorzugten Ausführungsform bildet die Kopfplatte das obere Ende des Spielzeugs. In einer bevorzugten Ausführungsform ist die Auflage als Teil der Kopfplatte ausgeführt. In einer bevorzugten Ausführungsform ist eine Leiterplatte, auf der in einer bevorzugten Ausführungsform der zweite Sensor angeordnet ist, mit der Kopfplatte verbunden. Der Einsatz einer Kopfplatte hat Vorteile bei der Herstellung des erfindungsgemäßen Spielzeugs. So kann ein Grundkörper des Spielzeugs in einem separaten Arbeitsschritt hergestellt werden und die Kopfplatte in einem separaten Herstellungsschritt hergestellt werden, wobei die Kopfplatte dann in einem Zusammenführungsschritt von oben auf den Grundkörper aufgesetzt wird.

In einer bevorzugten Ausführungsform ist die Auflage Teil einer Mulde. In einer Ausführungsform, bei der das erfindungsgemäße Spielzeug eine Kopfplatte aufweist, kann die Kopfplatte eine Vertiefung oder Ausnehmung aufweisen, die als Mulde genutzt werden kann. In einer bevorzugten Ausführungsform weist die Auflage einen Durchmesser, bzw. einen größten Querschnitt von 15mm bis 150mm, vorzugsweise von 30mm bis 100mm, vorzugsweise von 50mm bis 100mm auf. In einer bevorzugten Ausführungsform ist die Auflage als Teil einer Mulde ausgebildet. Vorzugsweise ist die Mulde kreisförmig ausgeführt. Vorzugsweise hat die Mulde einen Durchmesser von 15mm bis 150mm, vorzugsweise von 30mm bis 100mm, vorzugsweise von 50mm bis 100mm. In einer bevorzugten Ausführungsform weist die Mulde ein Tiefe von 0,3mm bis 5mm, vorzugsweise von 0,3mm bis 3mm, vorzugsweise von 0,5mm bis 1,5mm auf.

In einer bevorzugten Ausführungsform weist die Auflage eine Ausnehmung oder eine Delle auf. In einer bevorzugten Ausführungsform ist der Durchmesser der Ausnehmung beziehungsweise der Delle im Falle einer kreisförmigen Ausnehmung oder einer kreisförmigen Delle, oder aber der größte Querschnitt der Ausnehmung oder der Delle, bei einer Ausnehmung oder einer Delle, die nicht kreisförmig ist, um ein Vielfaches kleiner, insbesondere um das Fünffache, insbesondere bevorzugt um das Zehnfache, insbesondere bevorzugt um das Fünfzehnfache, kleiner als der Durchmesser der Auflage im Falle einer kreisförmigen Auflage, oder aber kleiner als der größte Querschnitt der Auflage bei einer Auflage, die nicht kreisförmig ist. Eine Ausnehmung oder Delle kann dazu genutzt werden, das auf die Auflage aufzulegende Objekt, beispielsweise eine Disk, in seiner Position auf der Auflage zu positionieren. Weist das auf die Auflage aufzulegende Objekt, beispielsweise eine Disk, einen Vorsprung auf, der in die Ausnehmung beziehungsweise die Delle eingreifen kann, so kann durch diesen Eingriff zwischen Vorsprung und Ausnehmung beziehungsweise Delle die Relativposition des Objekts, beispielsweise der Disk, relativ zur Auflage festgelegt werden.

In einer bevorzugten Ausführungsform ist der zweite Sensor in Flucht zu der Ausnehmung oder Delle unterhalb der Auflage angeordnet. In einer bevorzugten Ausführungsform führt eine senkrecht zur Außenoberfläche der Auflage führende Achse durch die Ausnehmung beziehungsweise durch die Delle und durch den zweiten Sensor, so dass dieser in Flucht zu der Ausnehmung beziehungsweise der Delle unterhalb der Auflage angeordnet ist. Die Ausnehmung kann ein Loch sein. Vorzugsweise ist die Ausnehmung jedoch ein Sackloch oder eine Nut und kann so verhindern, dass Schmutz von außen in das Innere des Spielzeugs gelangt.

In einer bevorzugten Ausführungsform ist unterhalb der Auflage eine Metallplatte angeordnet. Eine solche Metallplatte kann dafür genutzt werden, Objekten, die auf die Auflage aufgesetzt werden, beispielsweise eine Disk oder aber auch ein Kennungsträger, die Möglichkeit zu geben, sich an der Auflage festzuhalten. Sind die Disk oder Kennungsträger mit Magneten ausgestattet, so kann das Vorsehen einer Metallplatte unterhalb der Auflage die Möglichkeit bieten, dass durch die Magnete zwischen der Disk beziehungsweise dem Kennungsträger und der Metallplatte eine Haltekraft erzeugt wird, mit der die Disk beziehungsweise der Kennungsträger an der Auflage festgehalten wird.

In einer bevorzugten Ausführungsform weist die Metallplatte ein Loch auf. In einer bevorzugten Ausführungsform ist das Loch der Metallplatte in Flucht mit dem zweiten Sensor ausgeführt. Das Vorsehen eines Lochs in der Metallplatte erlaubt es, die Metallplatte unmittelbar unterhalb der Auflage vorzusehen und den zweiten Sensor wiederum unterhalb der Metallplatte vorzusehen. Durch das Vorsehen des Lochs ist aber sichergestellt, dass der zweite Sensor die Richtung eines Magnetfelds, das durch ein Objekt, das auf die Auflage aufgesetzt wird, erzeugt wird, relativ zu einer Vorzugsrichtung bestimmen kann. Das Loch kann in Flucht einer möglicherweise in der Auflage vorgesehenen Ausnehmung oder Delle ausgeführt sein.

In einer bevorzugten Ausführungsform ist die Metallplatte unterhalb der Auflage, aber oberhalb des zweiten Sensors vorgesehen. Dies ermöglicht es, die Metallplatte möglichst nah an die Auflage anzuordnen. Ferner ermöglicht es diese Anordnung, den zweiten Sensor auf einer Leiterplatte anzuordnen, der unterhalb der Metallplatte angeordnet werden kann. In einer bevorzugten Ausführungsform ist eine vorhandene Leiterplatte unterhalb der Metallplatte angeordnet und die Metallplatte mithin zwischen der Leiterplatte und der Auflage angeordnet.

In einer bevorzugten Ausführungsform ist die Metallplatte kreisförmig ausgeführt. In einer bevorzugten Ausführungsform, bei der die Metallplatte mit einem Loch ausgestattet ist, ist das Loch kreisförmig ausgeführt und in einer bevorzugten Ausführungsform im Mittelpunkt der kreisförmigen Metallplatte vorgesehen. In einer bevorzugten Ausführungsform ist der Durchmesser des Lochs um ein Vielfaches kleiner, insbesondere um das Fünffache, insbesondere bevorzugt um das Zehnfache, insbesondere bevorzugt um das Fünfzehnfache, kleiner als der Durchmesser der kreisförmigen Metallplatte.

In einer bevorzugten Ausführungsform wird die Auflage durch einen LED-Ring umschlossen. Ist die Auflage Teil einer ebenen Außenoberfläche eines plattenförmigen Objekts, so kann der LED-Ring mit dieser Außenoberfläche plan abschließend ausgeführt sein. Wird die Auflage als Teil einer Mulde gebildet, so kann der LED-Ring an der oberen Kante der Mulde, also an dem Ort, an dem die Mulde beginnt, nach innen zurückzuspringend, angeordnet sein. Der LED-Ring kann auch Teil der Seitenwand der Mulde sein. Der LED-Ring kann auch im Grund der Mulde angeordnet sein.

In einer bevorzugten Ausführungsform ist der LED-Ring aus einer Abfolge von einzeln ansteuerbaren LEDs gebildet. In einer bevorzugten Ausführungsform können die einzelnen LEDs so angesteuert werden, dass die einzelne LED in unterschiedlichen Betriebszuständen in unterschiedlichen Farben leuchtet. Eine derartige Ausstattung des LED-Rings ermöglicht Betriebssituationen, bei denen der LED-Ring als durchgängiger Ring einfarbig leuchtet. In anderen Betriebssituationen ermöglicht es ein derart ausgestatteter LED-Ring, dynamische Bildfolgen zu erzeugen. Beispielsweise kann mit einem derartigen LED-Ring ein "umlaufender Bildpunkt" gebildet werden.

In einer bevorzugten Ausführungsform kann die Kontrolleinheit den LED-Ring, insbesondere die einzelnen LEDs des LED-Rings, in Abhängigkeit eines Messsignals des zweiten Sensors ansteuern. Beispielsweise ist es möglich, mittels des Signals des zweiten Sensors den LED-Ring derart anzusteuern, dass er die Ausrichtung des auf den zweiten Sensor wirkenden Magnetfelds visualisiert, also beispielsweise nur die LEDs des LED-Rings leuchten, die in Flucht mit der Linie liegen, entlang der das auf den zweiten Sensor wirkende Magnetfeld ausgerichtet ist.

In einer bevorzugten Ausführungsform weist der LED-Ring einzelne LEDs, die Licht erzeugen können, und einen als Ring ausgeführten Lichtleiter (nachfolgend: Lichtleiterring) auf, der das von den LEDs erzeugte Licht weiterleitet. In einer bevorzugten Ausführungsform sind die LEDs kreisförmig angeordnet und der Lichtleiterring oberhalb der kreisförmig angeordneten LEDs angeordnet, so dass jede LED das von ihr erzeugte Licht zumindestens überwiegend, vorzugsweise gänzlich in ein der jeweiligen LED zugeordnetes Kreissegment des Lichtleiterrings einstrahlt. In einer bevorzugten Ausführungsform ist der Lichtleiterring einstückig gefertigt und hat durchgängig die gleiche Lichtdurchlässigkeit. In einer alternativen Ausführungsform kann die sich durch die einzelnen LEDs ergebende Segmentierung aufgegriffen werden, indem der Lichtleiterring in einer bevorzugten Ausführungsform entweder aus kreissegmentförmigen Lichtleitern, die zur Bildung des Lichtleiterrings endseits miteinander verbunden werden, gebildet werden, wobei die einzelnen kreissegmentförmigen Lichtleiter an den Enden, an denen sie miteinander verbunden werden, eine schlechtere Lichtdurchlässigkeit aufweisen, so dass in den jeweiligen kreissegmentförmigen Lichtleiter eingestrahltes Licht durch den Lichtleiter strahlt, aber nicht in benachbarte kreissegmentförmige Lichtleiter. Alternativ wird kann eine Segmentierung erreicht werden, in dem bei einem einstückig hergestellten, ringförmigen Lichtleiter nachträglich im Innern Bereiche erzeugt werden, die eine schlechtere Lichtdurchlässigkeit haben.

In einer bevorzugten Ausführungsform sind die einzelnen LEDs des LED-Rings auf einer Leiterplatte (eine Platine, eine gedruckte Schaltung, ein "Printed Circuit Board" (PCB)) unterhalb der Auflage angeordnet und der Lichtleiterring ist oberhalb der LEDs angeordnet. In einer bevorzugten Ausführungsform wird die Auflage durch den Lichtleiterring umschlossen. Ist die Auflage Teil einer ebenen Außenoberfläche eines plattenförmigen Objekts, so kann der Lichtleiterring mit dieser Außenoberfläche plan abschließend ausgeführt sein. Wird die Auflage als Teil einer Mulde gebildet, so kann der Lichtleiterring an der oberen Kante der Mulde, also an dem Ort, an dem die Mulde beginnt, nach innen zurückzuspringend, angeordnet sein. Der Lichtleiterring kann auch Teil der Seitenwand der Mulde sein. Der Lichtleiterring kann auch im Grund der Mulde angeordnet sein.

In einer bevorzugten Ausführungsform sind die einzelnen LEDs des LED-Rings auf einer Leiterplatte (eine Platine, eine gedruckte Schaltung, ein "Printed Circuit Board" (PCB)) unterhalb der Auflage angeordnet und der zweite Sensor ist auf derselben Leiterplatte angeordnet oder auf einer separaten Leiterplatte, die mit der Leiterplatte, auf der die einzelnen LEDs angeordnet sind, verbunden ist. In einer bevorzugten Ausführungsform sind die LEDs nicht auf der Leiterplatte angeordnet, auf der der erste Sensor oder eine Auswerteeinheit des ersten Sensors angeordnet ist.

Ein Einsatzgebiet der Erfindung ist die Wiedergabe von Audioinformationen, insbesondere von Musikstücken, gesprochenen Texten oder der Kombination von Musikstücken und gesprochenen Texten. Diese Audioinformationen haben insbesondere bevorzugt eine Wiedergabedauer von mindestens 10s, vorzugsweise von mehr als 15s, insbesondere bevorzugt von mehr als 20s und besonders bevorzugt von mehr als 25s. Es ist in einer besonders bevorzugten Ausführungsform sogar vorgesehen, dass die Wiedergabedauer der Audioinformation mindestens 30s und besonders bevorzugt mehr als 1 min dauern kann. Beispielsweise haben Hörspiele, die insbesondere bevorzugt mit der Erfindung wiedergegeben werden sollen, häufig eine Länge von mehr als 5 min, teilweise auch von bis zu 30 min oder sogar mehr. Bei der erfindungsgemäß wiederzugebenden Audioinformation handelt es sich insbesondere nicht um ein Bestätigungssignal. Insbesondere handelt es sich bei der erfindungsgemäß wiederzugebenden Audioinformation nicht um einen Quittungston, der beispielsweise ausgegeben werden kann, wenn ein erstes Objekt relativ zu einem zweiten Objekt richtig ausgerichtet wurde. Ebenso handelt es sich bei der Audioinformation besonders bevorzugt nicht um ein Jingle, das abgespielt wird, wenn ein erstes Objekt in die Nähe eines zweiten Objekts gebracht wird oder in eine vorher festgelegte, bestimmte Position relativ zu dem zweiten Objekt gebracht wird. Die Erfindung befasst sich mit der Audioinformation, deren Wiedergabedauer länger andauert, wie dies bei Musikstücken oder gesprochenen Texten der Fall ist. Die Audioinformation ist insbesondere bevorzugt eine solche, bei deren Wiedergabe eine nicht periodische Reihenfolge von unterschiedlichen Tönen wiedergegeben wird.

Der Lautsprecher des erfindungsgemäßen Spielzeugs ist insbesondere bevorzugt ein Wandler, der elektrisch Signale in mechanische Schwingungen (Schall) umsetzen kann. Das erfindungsgemäße Spielzeug kann anstelle eines Lautsprechers oder in Ergänzung zu einem Lautsprecher auch einen Lautsprecheranschluss aufweisen, beispielsweise einen Speakon-, XLR-Anschluss oder beispielsweise eine 6,35mm-Klinkenbuchse. Indem die Kontrolleinheit den Lautsprecheranschluss ansteuert, kann sie bei an den Lautsprecheranschluss angeschlossenem Lautsprecher auch diesen Lautsprecher ansteuern.

In einer bevorzugten Ausführungsform weist das erfindungsgemäße Spielzeug mindestens zwei Lautsprecher auf, so dass eine Wiedergabe der Audioinformation in Stereo möglich wird.

In einer bevorzugten Ausführungsform weist das Spielzeug einen Speicher auf, in dem Daten hinterlegt sind, aufgrund derer die Kontrolleinheit den Lautsprecher zur Wiedergabe der Audioinformation ansteuern kann. Die Daten beinhalten insbesondere bevorzugt die Audioinformation in dem bestimmten Datenformat, beispielsweise einem MP3-Format oder einem WAV-Format. Es sind Ausführungsformen denkbar, bei denen der Speicher nur Daten einer einzigen Audioinformation aufweist. Das erfindungsgemäße Spielzeug kann bei einer solchen Ausführungsform dazu eingesetzt werden, bei entsprechendem Einstellen der Eigenschaft des Bereichs der Umgebung des ersten Sensors, bzw. bei entsprechendem Einstellen der Änderung der Eigenschaft des Bereichs der Umgebung des ersten Sensors eine einzige Audioinformation wiederzugeben, deren Wiedergabedauer insbesondere bevorzugt mindestens 10s dauert. In einer bevorzugten Ausführungsform sind in dem Speicher Daten verschiedener Audioinformationen abgelegt. Insbesondere bevorzugt ist bei einer solchen Ausführungsform die Kontrolleinheit derart ausgestaltet, dass sie, wenn der erste Sensor innerhalb des Bereichs seiner Umgebung eine bestimmte erste Eigenschaft oder eine bestimmte erste Änderung einer Eigenschaft dieser Umgebung feststellt oder die Kontrolleinheit eine bestimmte erste Änderung der von dem ersten Sensor festgestellten Eigenschaft feststellt, den Lautsprecher zur Wiedergabe einer ersten Audioinformation, deren Wiedergabe insbesondere bevorzugt mindestens 10s dauert, ansteuert, während die Kontrolleinheit den Lautsprecher zur Wiedergabe einer zweiten Audioinformation, deren Wiedergabe insbesondere bevorzugt mindestens 10s dauert, ansteuert, wenn der erste Sensor innerhalb des Bereichs seiner Umgebung eine bestimmte zweite Eigenschaft oder eine bestimmte zweite Änderung einer Eigenschaft dieser Umgebung feststellt oder die Kontrolleinheit eine bestimmte zweite Änderung der von dem ersten Sensor festgestellten Eigenschaft feststellt. Dadurch wird es möglich durch die bestimmte Beeinflussung der Eigenschaft des Bereichs der Umgebung des ersten Sensors oder durch eine bestimmte Beeinflussung der Änderung der Eigenschaft dieser Umgebung des ersten Sensors festzulegen, welche Audioinformation einer Mehrzahl von Audioinformationen das Spielzeug wiedergibt. Beispielsweise kann das Spielzeug eine bestimmte erste Audioinformation wiedergeben, wenn das Vorhandensein eines ersten RFID-Transponders in den Bereich der Umgebung des ersten Sensors festgestellt wird, während das Spielzeug eine zweite Audioinformation wiedergeben kann, wenn das Vorhandensein eines zweiten RFID-Transponders in den Bereich der Umgebung des ersten Sensors festgestellt wird.

In einer bevorzugten Ausführungsform sind die Daten einer Audioinformation als Datensatz mit getrennt auslesbaren Datenfolgen abgelegt, um beispielsweise ein Hörbuch in Form von einzelnen Kapiteln wiederzugeben, bzw. die einzelnen Kapitel eines Hörbuchs ansteuerbar zu machen. Jede Datenfolge eines Datensatzes kann in einer bevorzugten Ausführungsform separat ausgelesen und zur Ansteuerung des Lautsprechers verwendet werden.

In einer bevorzugten Ausführungsform weist das Spielezeug eine Einheit zum Empfangen von Daten aus dem Internet und/oder zum Senden von Daten ins Internet auf, insbesondere bevorzugt eine Antenne für ein Wireless Local Area Network (WLAN), eine mobile Datenfunktechnologie wie beispielsweise LTE, UMTS oder deren Vorgänger oder Nachfolger oder eine Anschlussbuchse für den Anschluss eines Kabels eines lokalen Netzwerks, das auch einen Internetzugang aufweist, beispielsweise eine Anschlussbuchse für ein Ethernet-Kabel. Durch das Vorhandensein einer Einheit zum Empfangen von Daten aus dem Internet besteht die Möglichkeit, dass die Kontrolleinheit die Daten, die die wiederzugebende Audioinformation in einem bestimmten Datenformat enthalten, aus dem Internet herunterlädt. Auf diese Weise kann das Spielzeug eine Audioinformation abspielen, die nicht in dem Spielzeug gespeichert war, bevor der erste Sensor innerhalb des Bereichs seiner Umgebung eine bestimmte Eigenschaft oder eine bestimmte Änderung einer Eigenschaft dieser Umgebung feststellt oder die Kontrolleinheit eine bestimmte Änderung der von dem ersten Sensor festgestellten Eigenschaft feststellt. Dabei kann die Kontrolleinheit derart ausgebildet sein, dass sie die Daten aus dem Internet empfängt und in einem Speicher dauerhaft ablegt und das Ansteuern des Lautsprechers zur Wiedergabe der Audioinformation auf Grundlage der in dem Speicher abgelegten Daten erfolgt. Ergänzend oder alternativ ist es denkbar, dass die Kontrolleinheit die aus dem Internet empfangenen Daten unmittelbar dazu verwendet, um den Lautsprecher zur Wiedergabe einer Audioinformation anzusteuern (sog. Streaming), wobei diese Ausführungsform auch das temporäre Zwischenspeichern der aus dem Internet empfangenen Daten in einem Zwischenspeicher umfassen kann.

Bei Ausführungsformen, die die Daten, die die Audioinformationen in einem bestimmten Datenformat enthalten, aus dem Internet empfangen, ist es beispielsweise denkbar, dass die Kontrolleinheit in einem Speicher eine bestimmte Serveradresse eines mit dem Internet verbundenen Servers vorhält und in einem Speicher eine Tabelle vorhält, in der eine jeweils bestimmte Eigenschaft oder eine jeweils bestimmte Änderung einer Eigenschaft einer jeweiligen Identifikationsnummer zugeordnet wird. Die Kontrolleinheit ist in einer solchen Ausführungsform dann dazu ausgebildet, um beim Erkennen der bestimmten Eigenschaft, bzw. der bestimmten Änderung der Eigenschaft mit dem konkreten Server zu kommunizieren und unter Rückgriff auf die der bestimmten Eigenschaft, bzw. der bestimmten Änderung der Eigenschaft zugeordneten Identifikationsnummer von dem Server einen bestimmten Datensatz herunterzuladen und für das Ansteuern des Lautsprechers zur Wiedergabe der sich aus diesen Daten ergebenden Audioinformation zu verwenden. Beispielsweise können auf dem Server Musiktitel als Daten in einem bestimmten Datenformat abgespeichert werden, wobei der jeweilige Musiktitel, bzw. die diesen Musiktitel enthaltenen Daten auf dem Server unter einem bestimmten Identifikationscode hinterlegt sind. In einer bevorzugten Ausführungsform enthält das erfindungsgemäße Spielzeug bereits eine Zuordnungstabelle, die bestimmte Eigenschaften, bzw. Änderungen der Eigenschaften des Bereichs der Umgebung des ersten Sensors einigen, einer Mehrzahl oder in einer bevorzugten Ausführungsform sogar allen Identifikationsnummern zuordnet, die auch auf der Datenbank des Servers verwendet werden. Damit wird die Kontrolleinheit in die Lage versetzt, gezielt Datensätze von dem Server herunterzuladen. Alternativ ist es denkbar, dass die Kontrolleinheit dazu ausgebildet ist, eine die festgestellte bestimmte Eigenschaft, bzw. eine die festgestellte bestimmte Änderung der Eigenschaft enthaltende Information an einen bestimmten Server zu übermitteln, der mit dem Internet verbunden ist. Die Zuordnung der erkannten bestimmten Eigenschaft, bzw. der erkannten bestimmten Änderung der Eigenschaft zu einer bestimmten Audioinformation kann dann auf dem Server erfolgen. Die Kontrolleinheit ist dann dazu ausgebildet, von dem Server Daten zu empfangen, die die wiederzugebende Audioinformation enthalten. Der Server übermittelt die Daten an das Spielzeug, die er der ihm von der Kontrolleinheit übermittelten bestimmten Eigenschaft, bzw. der ihm von der Kontrolleinheit übermittelten bestimmten Änderung der Eigenschaft zugeordnet hat. Diese Ausführungsform vermeidet die Notwendigkeit des Vorhaltens einer Zuordnungstabelle in dem Spielzeug und erhöht damit die Flexibilität des Empfangs bestimmter, die Audioinformation enthaltender Daten auf Grundlage einer bestimmten, festgestellten Eigenschaft, bzw. einer bestimmten festgestellten Änderung einer Eigenschaft des Bereichs der Umgebung des ersten Sensors. Eine solche Ausführungsform erlaubt es beispielsweise, die Anzahl der auf dem Server bereitgestellten Datensätze zu erhöhen, ohne dass eine Zuordnungstabelle in der Kontrolleinheit des Spielzeugs angepasst werden müsste.

In einer bevorzugten Ausführungsform ist die Kontrolleinheit dazu ausgebildet, den Lautsprecher zur Wiedergabe der Audioinformation unmittelbar anzusteuern. Insbesondere bevorzugt müssen der Kontrolleinheit zum Ansteuern des Lautsprechers zur Wiedergabe der Audioinformation keine weiteren Startsignale zugeführt werden. Es ist hierbei allerdings denkbar, dass die Kontrolleinheit die Ansteuerung des Lautsprechers zur Wiedergabe der Audioinformation durch ein Verzögerungsglied verzögert.

In einer bevorzugten Ausführungsform ist das Spielezeug würfelförmig ausgebildet. Das erfindungsgemäße Spielzeug kann auch andere Formen aufweisen, beispielsweise kugelförmig oder kann beispielsweise die Form von bei Kindern besonders bevorzugten, größeren Objekten einnehmen, wie beispielsweise die Form eines Schiffs, einer Lokomotive, eines Hauses oder eines Tiers, wie beispielsweise eines Elefanten.

In einer bevorzugten Ausführungsform weist das Spielzeug ein Bedienelement in Form einer Wippe auf, mit dem die Lautstärke der Wiedergabe der Audioinformation beeinflusst werden kann, indem die Wippe in einer ersten Stellung ein erstes Signal an die Kontrolleinheit sendet, beispielsweise ein Signal zum Erhöhen der Lautstärke der Wiedergabe der Audioinformation, und die Wippe in einer zweiten Stellung ein zweites Signal an die Kontrolleinheit sendet, beispielsweise ein Signal zur Reduktion der Lautstärke der Wiedergabe der Audioinformation. Ferner kann eine solche Wippe eine neutrale Mittelstellung aufweisen, in der kein die Lautstärke beeinflussendes Signal an die Kontrolleinheit gesendet wird. Alternativ ist es denkbar, dass das Spielzeug ein erstes Bedienelement aufweist, mit dem Signale zum Erhöhen der Lautstärke der Wiedergabe der Audioinformation an die Kontrolleinheit übermittelt werden können, und das Spielzeug ein zweites Bedienelement aufweist, mit dem Signale zur Reduktion der Lautstärke der Wiedergabe der Audioinformation an die Kontrolleinheit gesendet werden können. In einer besonders bevorzugten Ausführungsform ist das die Erhöhung der Lautstärke beeinflussende Bedienelement größer ausgebildet als das die Reduktion der Lautstärke der Wiedergabe der Audioinformation beeinflussende Bedienelement. In einer besonders bevorzugten Ausführungsform weisen die beiden Bedienelemente die Form von Ohren auf, die an einem Gehäuse eines Grundkörpers des Spielzeugs angebracht sind, beispielsweise von dem Gehäuse abstehen. Die ohrenförmigen Bedienelemente können das von ihnen zu erzeugende Signal zur Beeinflussung der Lautstärke der Wiedergabe der Audioinformation bei Durchführen einer Druckbewegung oder Knickbewegung abgeben. Das hat den Vorteil, dass der Benutzer die Funktion der Bedienelemente erkennen kann, ohne auf Sprachkenntnisse angewiesen zu sein.

In einer bevorzugten Ausführungsform weist das erfindungsgemäße Spielzeug ein Display auf. Dieses Display kann insbesondere eine E-Ink-Anzeige sein. Das Display kann auch ein berührungsempfindliches Display sein. Ergänzend oder alternativ kann das Spielzeug eine LED oder eine Sequenz von LEDs aufweisen.

In einer bevorzugten Ausführungsform weist das Spielzeug einen Näherungssensor, einen Bewegungssensor (Beschleunigungssensor), einen Sensor für Umgebungslicht, einen Feuchtigkeitssensor, einen Neigungssensor, einen GPS-Sensor und/oder einen gyroskopischen Sensor auf. Derartige Sensoren erlauben es, weitere Bedienbefehle für die Kontrolleinheit zu erzeugen. Beispielsweise kann ein derart ausgebildetes Spielzeug ein Schütteln erkennen und daraus ein Bediensignal für die Kontrolleinheit erzeugen. Beispielsweise kann ein Schütteln des Spielzeugs dazu eingesetzt werden, Daten verschiedener Audioinformationen in zufälliger Reihenfolge wiederzugeben. Ebenso kann ein derart ausgebildetes Spielzeug erkennen, ob von links oder von rechts ein leichter Schlag auf das Spielzeug ausgeübt wird. Dies kann beispielsweise dazu eingesetzt werden, innerhalb eines Datensatzes zu dem nächsten Kapitel oder zu einem vorherigen Kapitel zu springen. Ebenso kann ein derart ausgestaltetes Spielzeug erkennen, ob sie geworfen wird. Auch hieraus können Bediensignale erzeugt werden.

In einer bevorzugten Ausführungsform weist das Spielzeug einen Sensor auf, der ein von dem Abstand zwischen einem in dem Bereich der Aufnahme platzierten Objekt und der Aufnahme abhängiges Signal erzeugen kann, beispielsweise einen UltraschallSensor. Dadurch wird es möglich, in einer bevorzugten Ausführungsform des Spielzeugs die Ansteuerung des Lautsprechers von diesem Signal abhängig zu machen, beispielsweise davon, dass das Objekt die Aufnahme berührt oder fast berührt. Des Weiteren wird dadurch in einer ergänzenden oder alternativen Ausführungsform ermöglicht, auf eine Veränderung des Abstands hin weitere Bedienbefehlen zu erzeugen. Beispielsweise kann ein kurzes Entfernen und wieder Abstellen des Objekts dazu eingesetzt werden, innerhalb eines Datensatzes zu dem nächsten Kapitel zu springen.

Ein derart ausgerichtetes Spielzeug kann erkennen, ob es vertikal gekippt wird oder ob es horizontal gekippt wird. Auch diese Signale können zum Erzeugen von Bediensignalen für die Kontrolleinheit eingesetzt werden. Beispielsweise kann ein vertikales Kippen zu einem Navigieren innerhalb einer Wiedergabeliste eingesetzt werden, während ein horizontales Kippen einen Wechsel zwischen Applikationen ermöglicht.

In einer bevorzugten Ausführungsform weist das erfindungsgemäße Spielzeug einen Datenanschluss, beispielsweise einen USB-Anschluss auf. Über einen solchen Anschluss kann beispielsweise ein in einer bevorzugten Ausführungsform als Teil des Spielzeugs vorgesehener Speicher mit Audioinformationen enthaltenden Daten belegt werden. Ebenso ist es möglich, das erfindungsgemäße Spielzeug über einen solchen Anschluss mit einem Computer zu verbinden, beispielsweise um die Software des Spielzeugs zu konfigurieren.

In einer bevorzugten Ausführungsform ist das Spielzeug mit Schaumstoff oder einem anderen elastischen Material ummantelt. Insbesondere bevorzugt ist das erfindungsgemäße Spielzeug vollständig mit Schaumstoff oder einem anderen elastischen Material ummantelt, bzw. bei einer Ausführungsform mit einem Display nur in dem Bereich des Displays nicht mit Schaumstoff oder einem elastischen Material ummantelt. Die Ummantelung schützt zum einen die weiteren Bauelemente des Spielzeugs. Zum anderen schützt die Ummantelung Kinder vor Verletzungen.

In einer bevorzugten Ausführungsform weist das erfindungsgemäße Spielzeug einen Energiespeicher, insbesondere eine Batterie, insbesondere bevorzugt eine wiederaufladbare Batterie auf. In einer bevorzugten Ausführungsform ist das erfindungsgemäße Spielzeug derart ausgebildet, dass die Batterie drahtlos aufgeladen werden kann, beispielsweise mittels induktiver Energieübertragung. Dies bietet den Vorteil, dass die Ladestation kindgerecht ausgebildet werden kann, beispielsweise in Form einer Ladeschale, in die das erfindungsgemäße Spielzeug zum Aufladen allein gelegt werden muss. Dadurch wird vermieden, dass Kinder elektrische Kabel handhaben müssen, um die Batterie des erfindungsgemäßen Spielzeugs aufzuladen.

In einer bevorzugten Ausführungsform kann das erfindungsgemäße Spielzeug Licht erzeugen, beispielsweise um als Nachtlicht zu funktionieren. In einer bevorzugten Ausführungsform weist das erfindungsgemäße Spielzeug ein Gehäuse auf, in dem der erste Sensor so angeordnet ist, wobei der Bereich der Umgebung des ersten Sensors, in dem der erste Sensor eine Eigenschaft oder eine Änderung einer Eigenschaft dieser Umgebung feststellen kann, sich nicht weiter als 1 m, insbesondere bevorzugt nicht weiter als 150mm, insbesondere bevorzugt nicht weiter als 100 mm, insbesondere bevorzugt nicht weiter als 50 mm, insbesondere bevorzugt nicht weiter als 10 mm, insbesondere bevorzugt nicht weiter als 5 mm über eine Oberfläche des Gehäuses hinaus erstreckt. Dies bietet den Vorteil, dass die Eigenschaft, bzw. die Änderung der Eigenschaft, die der erste Sensor feststellen soll, damit die Kontrolleinheit den Lautsprecher zur Wiedergabe der Audioinformation ansteuert, nur in einem engen Bereich um das Gehäuse des Spielzeugs erkannt wird. Dies vermeidet Fehlbedienungen.

In einer bevorzugten Ausführungsform ist das Spielzeug aus nicht oder schwer brennbarem Material hergestellt.

In einer bevorzugten Ausführungsform weist das Spielzeug ein Mikrofon oder eine Anschlussmöglichkeit für eingehende Audiosignale, beispielsweise von einem Mikrofon auf. Dies ermöglicht es, das Spielzeug mit Sprache zu steuern oder Aufnahmen zu machen.

Insbesondere bevorzugt kann das Spielzeug über eine WLAN-Antenne in ein Wireless Local Area Network eingebunden sein und über die WLAN-Antenne Steuerbefehle empfangen, beispielsweise über ein Smartphone oder einen PC gesteuert werden. Diese Steuerbefehle sind in einer bevorzugten Ausführungsform keine Steuerbefehle, mit denen der Benutzer den Beginn der Wiedergabe der Audioinformation beeinflussen kann. Ebenso kann das erfindungsgemäße Spielzeug dazu ausgebildet sein, über eine Fernbedienung bedient zu werden. In einer bevorzugten Ausführungsform weist das erfindungsgemäße Spielzeug eine Kamera auf. Wird das erfindungsgemäße Spielzeug beispielsweise als Nachtlicht ausgebildet, so kann die Kamera eine Überwachungsfunktion für das neben dem Spielzeug liegende Kind übernehmen, indem die Kamera beispielsweise von einem Smartphone aus angesteuert werden kann und das von der Kamera aufgenommene Bild auf einem Display wie einem Fernseher, einem Smartphone oder anderem mobilen Display wiedergegeben werden kann. Ergänzend oder alternativ kann die von einem Mikrofon aufgenommene bzw. die durch eine Anschlussmöglichkeit eingespeiste Audioinformation auf diesem Wege auf einen Lautsprecher oder Smartphone wiedergegeben werden. Ebenso ist es möglich, dass ein über eine WLAN-Antenne in ein Wireless Local Area Network eingebundenes Spielzeug die wiederzugebende Audioinformation an andere Teilnehmer des Netzwerks übergibt, beispielsweise an einen Fernseher oder einen anderen Lautsprecher streamt.

Die Erfindung bezieht sich zum einen auf das erfindungsgemäße Spielzeug. Das erfindungsgemäße Spielzeug ist bereits ein verkehrsfähiges Gut. Durch das Bereitstellen des erfindungsgemäßen Spielzeugs können Dritte in die Lage versetzt werden, die erfindungsgemäßen Vorteile durch Hinzunahme eines Magneten zu erreichen.

Die Erfindung richtet sich aber auch auf ein System aus einem erfindungsgemäßen Spielzeug und einem Magnetträger, wobei der Magnetträger eine Rotationsachse aufweist, um die der Magnetträger rotieren kann, und einen radial magnetisierten Magneten aufweist, bei dem die magnetische Achse des Magneten senkrecht zur Rotationsachse steht. In einer bevorzugten Ausführungsform ist der Magnetträger eine Disk. Unter einem radial magnetisierten Magneten, bei dem die magnetische Achse des Magneten senkrecht zur Rotationsachse steht, wird ein solcher verstanden, bei dem die magnetische Achse des radial magnetisierten Magneten eine Ebene schneidet, die die Rotationsachse enthält. In einer bevorzugten Ausführungsform schneidet die magnetische Achse des radial magnetisierten Magneten die Rotationsachse.

In einer bevorzugten Ausführungsform des erfindungsgemäßen Systems liegt der Magnetträger, insbesondere die in einer bevorzugten Ausführungsform vorgesehene Disk, auf einer Auflage, insbesondere auf einer als Teil einer Mulde gebildeten Auflage des erfindungsgemäßen Spielzeugs auf.

Durch das Bereitstellen des Magnetträgers, insbesondere der Disk, wird ein Objekt geschaffen, mittels dem ein Magnetfeld erzeugt wird, das auf den zweiten Sensor wirken kann und dessen Ausrichtung relativ zu einer Vorzugsrichtung der zweite Sensor bestimmen kann.

Der bei dem erfindungsgemäßen System vorgesehene Magnetträger, insbesondere die Disk, hat eine Rotationsachse und einen radial magnetisierten Magneten, um damit die Möglichkeit zu schaffen, den Magnetträger, insbesondere bevorzugt die Disk, um die Rotationsachse zu drehen und dadurch die Richtung des auf den zweiten Sensor wirkenden Magnetfelds relativ zu einer Vorzugsrichtung zu ändern. Mithin kann bei dem erfindungsgemäßen System durch ein Drehen des Magnetträgers, insbesondere der Disk, ein von dem zweiten Sensor erfassbares Signal beziehungsweise eine von dem zweiten Sensor erfassbare Änderung eines Signals erzeugt werden, das zur Steuerung der Kontrolleinheit verwendet werden kann.

In einer bevorzugten Ausführungsform ist der Magnetträger, insbesondere bevorzugt die Disk, durch einen geometrischen Körper gebildet, dessen Form rotationssymmetrisch zu der Rotationsachse ist. In einer bevorzugten Ausführungsform ist die Disk eine Münze oder ein Ellipsoid. Der Magnetkörper kann auch durch zwei Kegel oder Kegelstümpfe, die jeweils mit ihren Basisflächen aneinandergrenzend angeordnet sind, ausgeführt sein.

In einer bevorzugten Ausführungsform weist die Disk einen Durchmesser von mehr als 15 mm, insbesondere bevorzugt von mehr als 20 mm, insbesondere bevorzugt von mehr als 25 mm, auf. In einer bevorzugten Ausführungsform weist die Disk einen Durchmesser von weniger als 150 mm, insbesondere bevorzugt von weniger als 120 mm, insbesondere bevorzugt von weniger als 100 mm, auf. In einer bevorzugten Ausführungsform ist die Disk hinreichend groß, so dass sie nicht verloren geht. Ein Einsatzgebiet des erfindungsgemäßen Systems ist als Spielzeug. Hier besteht die Gefahr, dass bei einer Disk, die zu klein ist, die Disk unter all den Gegenständen, die üblicherweise in einem Kinderspielzimmer vorhanden sind, verloren geht. Andererseits ist die Disk in einer bevorzugten Ausführungsform so klein, dass sie auch von Kinderhänden, beispielsweise auch von den Händen eines 2- oder 3-jährigen Kindes, gut gehandhabt werden kann. Ferner gilt zu berücksichtigen, dass die Disk auch dazu eingesetzt werden kann, durch eine rasche Rotation auf der Auflage beziehungsweise in der Mulde Bedienbefehle für die Kontrolleinheit zu erzeugen. Es hat sich gezeigt, dass für eine derartige Bedienung die Disk einerseits groß genug sein muss, um gut gegriffen und rasch gedreht werden zu können, andererseits klein genug sein muss, um nicht ein zu großes Trägheitsmoment um die Rotationsachse zu haben.

In einer bevorzugten Ausführungsform weist die Disk eine Oberseite und eine Unterseite auf, wobei der radial magnetisierte Magnet vorzugsweise mittig zwischen der Oberseite und der Unterseite angeordnet ist. In einer alternativen Ausführungsform weist die Disk eine Oberseite und eine Unterseite auf und weist einen ersten radial magnetisierten Magneten auf, der näher zur Unterseite angeordnet ist, und weist einen zweiten radial magnetisierten Magneten auf, der näher zur Oberseite angeordnet ist. In einer bevorzugten Ausführungsform ist die magnetische Achse des ersten radial magnetisierten Magneten parallel zur magnetischen Achse des zweiten radial magnetisierten Magneten. In einer alternativen Ausführungsform ist die magnetische Achse des ersten radial magnetisierten Magneten nicht parallel zur magnetischen Achse des zweiten radial magnetisierten Magneten. In einer alternativen Ausführungsform weist die Disk eine Oberseite und eine Unterseite auf und weist einen radial magnetisierten Magneten auf, der näher zur Unterseite angeordnet ist.

Es sind Ausführungsformen denkbar, bei denen der radial magnetisierte Magnet an der Oberseite oder der Unterseite der Disk vorsteht, bzw. an die Oberseite oder Unterseite der Disk angebracht, beispielsweise geklebt ist. Das Vorstehen des radial magnetisierten Magneten über die Oberseite oder die Unterseite der Disk kann dazu genutzt werden, den überstehenden Teil des Magneten in eine Ausnehmung oder Delle in der Auflage des Spielzeugs einzulegen.

Die Disk kann insbesondere aus Kunststoff oder aus Holz oder aber auch aus einem Metall, vorzugsweise aus einem nicht-magnetischem Metall, sein.

In einer bevorzugten Ausführungsform weist der Magnetträger, insbesondere die Disk, zusätzlich zu dem radial magnetisierten Magneten mindestens noch einen axial magnetisierten Magneten auf, dessen magnetische Achse durch die Rotationsachse oder parallel zur Rotationsachse verläuft. In einer bevorzugten Ausführungsform sind mindestens zwei, insbesondere bevorzugt mindestens drei, insbesondere bevorzugt mindestens vier, axial magnetisierte Magneten vorgesehen. In einer bevorzugten Ausführungsform sind weniger als 100, insbesondere bevorzugt weniger als 50, insbesondere bevorzugt weniger als 20, insbesondere bevorzugt weniger als 10, axial magnetisierte Magneten vorgesehen. In einer bevorzugten Ausführungsform sind die vorhandenen axial magnetisierten Magneten mit gleichem Abstand zueinander um die Rotationsachse herum angeordnet. In einer bevorzugten Ausführungsform sind alle vorhandenen axial magnetisierten Magneten auf einem Kreis um die Rotationsachse herum angeordnet und weisen in einer besonders bevorzugten Ausführungsform die gleichen Abstände in Umfangsrichtung zueinander auf. Sind beispielsweise drei axial magnetisierte Magneten vorgesehen, so weisen diese insbesondere bevorzugt einen Winkel von 120° zueinander auf. Sind vier axial magnetisierte Magneten vorgesehen, so weisen diese beispielsweise einen Winkelabstand von 90° zueinander auf. Die axial magnetisierten Magneten können dazu genutzt werden, den Magnetträger, insbesondere die Disk, an einer Metallplatte des Spielzeugs, die vorzugsweise unterhalb der Auflage angeordnet ist, festzuhalten. In einer bevorzugten Ausführungsform sind die axial magnetisierten Magneten hinreichend stark gewählt, um die Disk an der Auflage zu halten und erlauben es beispielsweise, das erfindungsgemäße Spielzeug mit der an der Auflage aufliegenden Disk über Kopf zu halten, ohne dass die Disk abfällt. Andererseits ist die Stärke der axial magnetisierten Magnete so gering gewählt, dass sie ein Drehen der Disk um die Rotationsachse erlaubt.

In einer bevorzugten Ausführungsform ist der radial magnetisierte Magnet rechteckförmig, insbesondere bevorzugt quadratisch, oder elliptisch oder polygon ausgeführt. Ein solcher Magnet kann in eine entsprechend geformte Ausnehmung der Disk eingesetzt werden, wobei durch die Formgebung verhindert wird, dass der radial magnetisierte Magnet in der Ausnehmung rotiert. Dadurch wird die Ausrichtung des Magnetfelds des radial magnetisierten Magneten relativ zur Disk festgelegt.

In einer bevorzugten Ausführungsform hat der radial magnetisierte Magnet eine Magnetisierung von N50. In einer bevorzugten Ausführungsform hat der radial magnetisierte Magnet eine Remanenz von 1,00 bis 1,5T.

In einer bevorzugten Ausführungsform sind die axial magnetisierten Magnete scheibenförmig ausgeführt, wobei die Magnetisierungsrichtung durch die Dicke der Scheibe führt. In einer bevorzugten Ausführungsform haben die axial magnetisierten Magnete jeweils eine Remanenz von 1,00 bis 1,5T.

In einer bevorzugten Ausführungsform weist die Disk einen passiven RFID-Transponder oder einen aktiven RFID-Transponder auf. Das Vorsehen eines RFID-Transponders erlaubt es, mittels der Disk nicht nur ein in eine bestimmte Richtung wirkendes Magnetfeld auf den zweiten Sensor wirken zu lassen, sondern zudem eine durch den ersten Sensor auslesbare Information bereitzustellen. Diese Information kann einerseits allein in einer Zugehörigkeitsinformation zu einem erfindungsgemäßen System bestehen. So ist es denkbar, dass die Kontrolleinheit des Spielzeugs nur dann die von dem zweiten Sensor erzeugten Signale weiterverarbeitet oder von diesen Kontrollbefehle ableitet, wenn zugleich der erste Sensor eine bestimmte Information aus dem in der Disk vorgesehenen passiven oder aktiven RFID-Transponder ableitet. Beispielsweise kann vorgesehen sein, dass ohne das Vorhandensein eines RFID-Transponders in der Disk und mithin eines entsprechenden Signals des ersten Sensors die Kontrolleinheit die Signale des zweiten Sensors nicht weiterverarbeitet. Alternativ kann das Vorhandensein des RFID-Transponders dazu genutzt werden, bestimmte Programme in der Kontrolleinheit auszulösen. Beispielsweise ist es denkbar, mittels der Disk verschiedene Spiele mit dem Spielzeug durchzuführen. Durch bestimmte Kodierungen des jeweiligen RFID-Transponders kann dem Spielzeug mitgeteilt werden, zu welchem Spiel die jeweilige Disk gehört.

In einer bevorzugten Ausführungsform ist innerhalb des erfindungsgemäßen Systems zusätzlich zu dem Magnetträger, insbesondere zusätzlich zu der Disk, ein Kennungsträger vorgesehen, der eine Eigenschaft hat, die der erste Sensor feststellen kann, nämlich einen passiven RFID-Transponder oder einen aktiven RFID-Transponder aufweist. Dadurch wird es möglich, durch das erfindungsgemäße Spielzeug die aus WO 2015/104222 A1 bekannte Funktionalität umzusetzen. Wird anstelle des Magnetträgers, insbesondere anstelle der Disk, der Kennungsträger auf die Auflage gesetzt, so kann der erste Sensor dessen passiven RFID-Transponder oder dessen aktiven RFID-Transponder auslesen und diese Information dazu nutzen, eine Datei zu identifizieren, deren Audioinformation die Kontrolleinheit über den Lautsprecher beziehungsweise den Lautsprecheranschluss abspielen soll, so wie dies in WO 2015/104222 A1 beschrieben ist. In solch einem Anwendungsfall wäre der Magnetträger, insbesondere die Disk, innerhalb des Systems zwar vorhanden, würde aber in der konkreten Betriebssituation nicht auf die Auflage gelegt. Ebenso ist es möglich, Betriebssituationen zu erzeugen, bei denen sowohl der Magnetträger, insbesondere die Disk, als auch der Kennungsträger vorhanden ist. Beispielsweise ist es denkbar, dass die Disk auf die Auflage gelegt wird und der Kennungsträger auf die Disk gestellt wird.

In einer weiteren Ausführungsform kann das System den Magnetträger und den Kennungsträger umfassen, wobei der Magnetträger und der Kennungsträger zusammen auf das Spielzeug aufgelegt werden. Auf diese Weise kann die Vielfältigkeit des Systems erhöht werden. Beispielsweise kann mittels des Kennungsträgers ein Programm gestartet werden, wobei mittels des Magnetträgers das Programm gesteuert werden kann. Auf diese Weise kann die Vielfältigkeit des Systems weiter erhöht werden, indem mit dem Magnetträger und einer Vielzahl von Kennungsträgern verschiedene Programme genutzt werden können. Beispielsweise können auch Spiele gespielt werden. Ferner kann der Magnetträger einen RFID-Transponder aufweisen. Somit kann das Spielzeug anhand des RFID-Transponders des Magnetträgers oder anhand der Kombination des RFID-Transponders des Kennungsträgers und des RFID-Transponders des Magnetträgers ein Programm oder eine Geschichte auswählen. Der Magnetträger und der Kennungsträger können so ausgebildet sein, dass der Kennungsträger den Magnetträger umgeben kann. Auf diese Weise kann die Bedienung des Systems erleichtert werden, da die Positionierung des Magnetträgers in Bezug auf den Kennungsträger erleichtert werden kann.

In einer weiteren Ausführungsform kann der Magnetträger und/oder der Kennungsträger ein Betätigungselement aufweisen. Auf diese Weise kann die Funktionalität und Vielseitigkeit des Systems erhöht werden. Das Betätigungselement kann beispielsweise eine Taste oder ein Stellrad sein. Beispielsweise kann der RFID-Transponder mit dem Betätigungselement verbunden sein, wobei insbesondere das Betätigungselement so ausgebildet sein kann, dass das Betätigungselement die Kommunikation des RFID-Transponders mit dem ersten Sensor beeinflussen kann. Beispielsweise kann die Kommunikation zwischen dem RFID-Transponder und dem ersten Sensor durch das Drücken des Betätigungselements beeinflusst werden.

In einer weiteren Ausführungsform kann die Information auf dem RFID-Transponder der Disk und/oder des Kennungsträgers verändert werden. Zusätzlich oder alternativ kann die Datei, die der Information auf dem RFID-Transponder zugeordnet sein kann, verändert werden. Auf diese Weise kann die Vielseitigkeit des Systems auf einfache Weise erhöht werden. Beispielsweise können Programmcodes als Information auf dem RFID-Transponder und/oder auf der Datei, die der Information auf dem RFID-Transponder zugeordnet sein kann, abgelegt werden. Durch das Ablegen von Programmcodes kann die Vielseitigkeit des Systems weiter erhöht werden, da beispielsweise weitere Spiele programmiert werden können. Ein Programmcode kann beispielsweise Google Blockly sein.

In einer bevorzugten Ausführungsform ist innerhalb des Systems
- ein erster Magnetträger, insbesondere eine erste Disk, vorgesehen, wobei der erste Magnetträger eine Rotationsachse aufweist, um die er rotieren kann, und einen radial magnetisierten Magneten aufweist, bei dem die magnetische Achse des Magneten senkrecht zur Rotationsachse steht und
- ein zweiter Magnetträger, insbesondere eine zweite Disk, vorgesehen, wobei der zweite Magnetträger eine Rotationsachse aufweist, um die er rotieren kann, und einen radial magnetisierten Magneten aufweist, bei dem die magnetische Achse des Magneten senkrecht zur Rotationsachse steht.

Das Vorsehen eines ersten Magnetträgers und eines zweiten Magnetträgers erlaubt unterschiedliche Formen der Interaktion mit dem Spielzeug.

In einer bevorzugten Ausführungsform weisen die erste Disk und die zweite Disk jeweils einen passiven RFID-Transponder oder einen aktiven RFID-Transponder auf. Das Vorsehen eines RFID-Transponders erlaubt es, mittels der Disk nicht nur ein in eine bestimmte Richtung wirkendes Magnetfeld auf den zweiten Sensor wirken zu lassen, sondern zudem eine durch den ersten Sensor auslesbare Information bereitzustellen.

So kann durch den ersten Sensor festgestellt werden, welche Disk auf dem Spielzeug liegt. Abhängig von der Disk kann die Kontrolleinheit den Lautsprecher, bzw. den Lautsprecheranschluss und/oder einen ggf. vorgesehenen LED-Ring unterschiedlich ansteuern.

In einer bevorzugten Ausführungsform ist der Umriss des Magnetträgers, insbesondere der Umriss der Disk in einer Draufsicht entlang der Rotationsachse kreisförmig, elliptisch oder polygonal, insbesondere bevorzugte fünfeckig, sechseckig oder achteckig. In einer bevorzugten Ausführungsform der Ausführungsform mit einem ersten Magnetträger und einem zweiten Magnetträger ist der Umriss des ersten Magnetträgers in einer Draufsicht entlang der Rotationsachse unterschiedlich zu dem Umriss des zweiten Magnetträgers in einer Draufsicht entlang der Rotationsachse.

In einer bevorzugten Ausführungsform der Ausführungsform mit einem ersten Magnetträger und einem zweiten Magnetträger weist
- der erste Magnetträger eine Unterseite und eine Oberseite auf, wobei die Unterseite dazu vorgesehen ist, den ersten Magnetträger auf die Auflage aufzulegen,
- der zweite Magnetträger eine Unterseite und eine Oberseite auf, wobei die Unterseite dazu vorgesehen ist, den zweiten Magnetträger auf die Auflage aufzulegen,
wobei die Unterseite des ersten Magnetträgers die gleiche Form aufweist, wie die Unterseite des zweiten Magnetträgers und insbesondere bevorzugt flach ausgeführt ist und wobei die Oberseite des ersten Magnetträgers anders geformt ist, wie die Oberseite des zweiten Magnetträgers. Beispielsweise kann die Oberseite des ersten Magnetträgers wie die Unterseite des ersten Magnetträgers flach ausgebildet sein, während die Oberseite des zweiten Magnetträgers wellig ausgeführt ist oder einen vorspringenden Stift aufweist.

Das erfindungsgemäße Verfahren zum Betreiben eines erfindungsgemäßen Systems sieht vor, dass
- der zweite Sensor die Richtung eines auf den zweiten Sensor wirkenden, von dem radial magnetisierten Magneten erzeugten Magnetfelds relativ zu einer Vorzugsrichtung bestimmt und
- die Kontrolleinheit auf Grundlage der von dem zweiten Sensor bestimmten Richtung des auf den zweiten Sensor wirkenden, von dem radial magnetisierten Magneten erzeugten Magnetfelds relativ zu einer Vorzugsrichtung den Lautsprecher oder den Lautsprecheranschluss zur Wiedergabe von Musik oder einer gesprochenen Geschichten ansteuert.

In einer bevorzugten Ausführungsform hängt der Inhalt der Musik oder der gesprochenen Geschichte, zu deren Wiedergabe die Kontrolleinheit den Lautsprecher oder den Lautsprecheranschluss ansteuert von der von dem zweiten Sensor bestimmten Richtung des auf den zweiten Sensor wirkenden, von dem radial magnetisierten Magneten erzeugten Magnetfelds relativ zur Vorzugsrichtung ab. So kann beispielsweise bei einer ersten Richtung eine Musik oder eine gesprochene Geschichte mit einem ersten Inhalt und bei einer zweiten, von der ersten unterschiedlichen Richtung wird eine Musik oder eine gesprochene Geschichte mit einem zweiten, von dem ersten unterschiedlichen Inhalt wiedergegeben werden.

In einer bevorzugten Ausführungsform wird das Verfahren an einem Spielzeug durchgeführt, bei dem die Auflage des Spielzeugs durch einen eine LED aufweisenden LED-Ring umschlossen wird. In der bevorzugten Ausführungsform steuert die Kontrolleinheit auf Grundlage der von dem zweiten Sensor bestimmten Richtung des auf den zweiten Sensor wirkenden, von dem radial magnetisierten Magneten erzeugten Magnetfelds relativ zu einer Vorzugsrichtung eine LED des LED-Rings an. Der LED-Ring kann mehrere LEDs aufweisen, die bei einer bestimmten Richtung unterschiedlich angesteuert werden.

In einer bevorzugten Ausführungsform hängt die Art der Ansteuerung der LED von der von dem zweiten Sensor bestimmten Richtung des auf den zweiten Sensor wirkenden, von dem radial magnetisierten Magneten erzeugten Magnetfelds relativ zur Vorzugsrichtung ab. So kann beispielsweise bei einer ersten Richtung die LED angesteuert werden und bei einer zweiten, von der ersten unterschiedlichen Richtung die LED nicht angesteuert werden. Oder es kann beispielsweise bei einer ersten Richtung die LED zur Wiedergabe von Licht einer ersten Farbe angesteuert werden und bei einer zweiten, von der ersten unterschiedlichen Richtung die LED zur Wiedergabe von Licht einer zweiten, von der ersten unterschiedlichen Farbe angesteuert werden.

In einer bevorzugten Ausführungsform kann zur Auswahl des Inhalts der Musik oder der gesprochenen Geschichte, zu deren Wiedergabe die Kontrolleinheit den Lautsprecher oder den Lautsprecheranschluss angesteuert werden kann, eine Ausrichtung für die Richtung eines auf den zweiten Sensor wirkenden, von dem radial magnetisierten Magneten erzeugten Magnetfelds relativ zu einer Vorzugsrichtung, durch mindestens eine LED des LED-Rings angezeigt werden. Hierdurch kann eine Ausrichtung für die Richtung eines auf den zweiten Sensor wirkenden, von dem radial magnetisierten Magneten erzeugten Magnetfelds relativ zu einer Vorzugsrichtung besonders einfach angezeigt werden. Eine Ausrichtung kann eine Vorgabe sein anhand derer die Richtung eines auf den zweiten Sensor wirkenden, von dem radial magnetisierten Magneten erzeugten Magnetfelds relativ zu einer Vorzugsrichtung orientiert bzw. ausgerichtet werden kann. Zum Anzeigen einer Ausrichtung kann beispielsweise eine Markierung auf einem Magnetträger auf die mindestens eine LED des LED-Rings ausgerichtet werden.

Insbesondere kann die Richtung des auf den zweiten Sensor wirkenden, von dem radial magnetisierten Magneten erzeugten Magnetfelds relativ zu einer Vorzugsrichtung, in Bezug auf die mindestens eine LED des LED-Rings, insbesondere als Ausrichtung, ausgerichtet werden. Vorzugsweise kann, insbesondere als Ausrichtung, die Richtung eines auf den zweiten Sensor wirkenden, von dem radial magnetisierten Magneten erzeugten Magnetfelds relativ zu einer Vorzugsrichtung, auf die mindestens eine LED des LED-Rings ausgerichtet werden. Beispielsweise kann das von dem radial magnetisierten Magneten erzeugten Magnetfeld durch Drehen des Magnetträgers auf eine definierte Position in Bezug auf die mindestens eine LED ausgerichtet werden, um den Inhalt der Musik oder der gesprochenen Geschichte auswählen zu können. Auf diese Weise kann das Verfahren eine besonders einfache Handhabung und Bedienung aufweisen. Zudem kann die Dateneingabe für die Auswahl des Inhalts der Musik oder der gesprochenen Geschichte besonders einfach und schnell sein. Hierdurch kann das Verfahren besonders effizient werden.

Beispielsweise kann der Ausrichtung Informationsdaten auf einem weiteren Informationsmittel zugeordnet sein, wobei die Informationsdaten auf dem weiteren Informationsmittel auf das Spielzeug übertragen werden können, indem die Richtung eines auf den zweiten Sensor wirkenden, von dem radial magnetisierten Magneten erzeugten Magnetfelds relativ zu einer Vorzugsrichtung in Bezug auf die mindestens eine LED des LED-Rings oder auf die mindestens eine LED des LED-Rings ausgerichtet werden kann. Auf diese Weise kann eine besonders einfache Handhabung und Bedienung mit dem Verfahren erreicht werden. Zudem kann die Dateneingabe von Informationsdaten des weiteren Informationsmittels für die Auswahl des Inhalts der Musik oder der gesprochenen Geschichte besonders einfach und schnell sein. Hierdurch wird das Verfahren besonders effizient.

Die mindestens eine LED des LED-Rings kann die Ausrichtung beispielsweise durch mindestens eine Farbe und/oder eine Taktung anzeigen. Beispielsweise können mehrere LEDs des LED-Rings verschiedene mögliche Ausrichtungen anzeigen, sodass die Auswahlmöglichkeiten des Verfahrens erhöht werden kann. Somit können komplexere Informationsdaten übertragen werden, sodass das Verfahren effizienter sein kann. Die Taktung der LED kann die Frequenz sein, mit der die LED eingeschaltet und ausgeschaltet werden kann.

In einer bevorzugten Ausführungsform wird das Verfahren an einem System mit einem Magnetträger durchgeführt, der einen passiven RFID-Transponder oder aktiven RFID-Transponder aufweist. In einer bevorzugten Ausführungsform hängt der Inhalt der Musik oder der gesprochenen Geschichte, zu deren Wiedergabe die Kontrolleinheit den Lautsprecher oder den Lautsprecheranschluss ansteuert von
- der von dem zweiten Sensor bestimmten Richtung des auf den zweiten Sensor wirkenden, von dem radial magnetisierten Magneten erzeugten Magnetfelds relativ zur Vorzugsrichtung
   und
- einer Information ab, die der erste Sensor aus dem passiven RFID-Transponder oder dem aktiven RFID-Transponder ausliest.

In einer bevorzugten Ausführungsform wird das Verfahren an einem System mit
- einem ersten Magnetträger, der einen ersten passiven RFID-Transponder oder ersten aktiven RFID-Transponder aufweist,
   und
- einem zweiten Magnetträger, der einen zweiten passiven RFID-Transponder oder ersten zweiten RFID-Transponder aufweist,
durchgeführt. In einer bevorzugten Ausführungsform hängt der Inhalt der Musik oder der gesprochenen Geschichte, zu deren Wiedergabe die Kontrolleinheit den Lautsprecher oder den Lautsprecheranschluss ansteuert, von
- der von dem zweiten Sensor bestimmten Richtung des auf den zweiten Sensor wirkenden, von dem radial magnetisierten Magneten erzeugten Magnetfelds relativ zur Vorzugsrichtung ab
und davon ab, ob der erste Sensor den ersten passiven RFID-Transponder oder ersten RFID-Transponder oder zweiten passiven RFID-Transponder oder ersten zweiten RFID-Transponder erkennt.

In einer Ausführungsform kann das Verfahren mit einem System mit dem Magnetträger und dem Kennungsträger ausgeführt werden, wobei der Magnetträger und der Kennungsträger zusammen auf das Spielzeug aufgelegt werden können. Auf diese Weise kann die Vielfältigkeit des Verfahrens erhöht werden. Beispielsweise kann mittels des Kennungsträgers ein Programm gestartet werden, wobei mittels des Magnetträgers das Programm gesteuert werden kann. Auf diese Weise kann die Vielfältigkeit des Verfahrens weiter erhöht werden, indem mit dem Magnetträger und einer Vielzahl von Kennungsträgern verschiedene Programme genutzt werden können. Beispielsweise können auch Spiele gespielt werden. Ferner kann auch der Magnetträger einen RFID-Transponder aufweisen. Somit kann bei dem Verfahren das Spielzeug beispielsweise anhand des RFID-Transponders des Magnetträgers oder anhand der Kombination des RFID-Transponders des Kennungsträgers und des RFID-Transponders des Magnetträgers ein Programm auswählen. Der Kennungsträger kann um den Magnetträger gelegt werden. Auf diese Weise kann das Verfahren erleichtert werden, da die Positionierung des Magnetträgers in Bezug auf den Kennungsträger erleichtert werden kann.

In einer weiteren Ausführungsform des Verfahrens kann ein Betätigungselement des Magnetträgers und/oder des Kennungsträgers betätigt werden. Auf diese Weise kann die Funktionalität und Vielseitigkeit des Verfahrens erhöht werden. Ein Betätigungselement kann beispielsweise eine Taste oder ein Stellrad sein. Beispielsweise kann der RFID-Transponder mit dem Betätigungselement verbunden sein, wobei durch das Betätigen des Betätigungselements die Kommunikation des RFID-Transponders mit dem ersten Sensor beeinflusst werden kann. Beispielsweise kann die Kommunikation zwischen dem RFID-Transponder und dem ersten Sensor durch das Drücken des Betätigungselements beeinflusst werden.

Nachfolgend wird die Erfindung anhand einer lediglich Ausführungsformen der Erfindung näher darstellenden Zeichnung erläutert.

Darin zeigen:
- Fig. 1: eine schematische, perspektivische Ansicht eines Systems mit einem Spielzeug und einer Disk;
- Fig. 2: eine geschnittene Seitenansicht einer Kopfplatte des Spielzeugs des Systems gemäß Fig. 1 und eine geschnittene Seitenansicht der Disk des Systems gemäß Fig. 1;
- Fig. 3: schematische Seitenansichten von zwei möglichen Ausführungsformen von Disks, die in einem System gemäß Fig. 1 eingesetzt werden können;
- Fig. 4: eine Ansicht von unten auf eine Disk, die in einem System gemäß Fig. 1 eingesetzt werden kann;
- Fig. 5: eine schematische, perspektivische Ansicht auf ein Kopfplatte des Spielzeugs des Systems und einer auf die Kopfplatte aufgelegten Disk des Systems in einer ersten Ausführungsform;
- Fig. 6: eine schematische, perspektivische Ansicht auf ein Kopfplatte des Spielzeugs des Systems und einer auf die Kopfplatte aufgelegten Disk des Systems in einer zweiten Ausführungsform;
- Fig. 7: eine schematische, perspektivische Ansicht auf eine Kopfplatte des Spielzeugs des Systems und einer auf die Kopfplatte aufgelegten Disk des Systems in einer dritten Ausführungsform;
- Fig. 8: eine schematische, perspektivische Ansicht auf ein Kopfplatte des Spielzeugs des Systems und einer auf die Kopfplatte aufgelegten Disk des Systems in einer vierten Ausführungsform;
- Fig. 9: eine schematische, perspektivische Ansicht auf ein Kopfplatte des Spielzeugs des Systems in einer weiteren Ausführungsform;
- Fig. 10: eine schematische, perspektivische Ansicht von unten auf eine Disk des Systems;
- Fig. 11: eine Explosionsdarstellung des Aufbaus einer Kopfplatte eines Spielzeugs des Systems;
- Fig. 12: eine schematische, perspektivische Ansicht auf eine Kopfplatte des Spielzeugs des Systems in der Ausführungsform gemäß Fig. 9 mit in eine Mulde der Kopfplatte eingesetzten Disk;
- Fig. 13: eine schematische Ansicht eines erfindungsgemäßen Systems mit einem Spielzeug, einer Disk und einem Kennungsträger;
- Fig. 14: eine schematische Ansicht eines erfindungsgemäßen Systems mit einem Spielzeug, einer Disk und einem Kennungsträger.

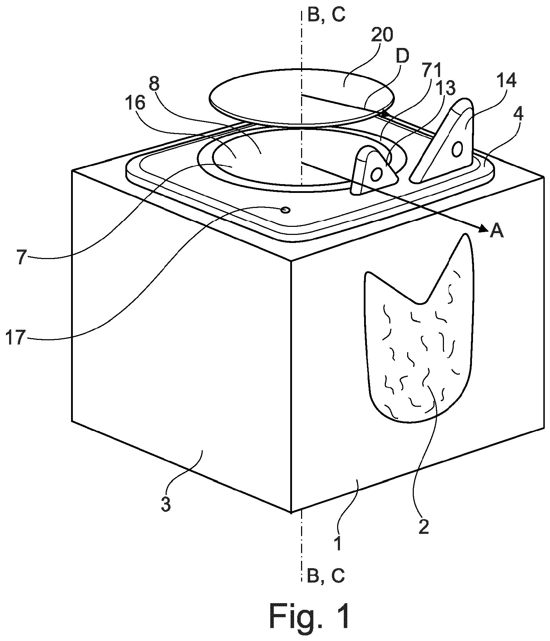

Fig. 1 zeigt ein Spielzeug 1 zur Wiedergabe von Musik oder einer gesprochenen Geschichten. Das Spielzeug 1 ist in der in Fig. 1 gezeigten Ausführungsform würfelförmig ausgeführt und weist an einer Seitenwand einen Lautsprecher 2 auf.

Das Spielzeug weist an seinen Seitenwänden und an Teilen seiner Oberseite und Unterseite (Unterseite in der Perspektive der Fig. 1 nicht sichtbar) einen Mantel 3 aus Schaumstoff auf, der von einer Lederhaut umfasst ist. Im Bereich des Lautsprechers 2 weist der Mantel 3 Löcher auf, durch die die Schallwellen besser nach außen austreten können.

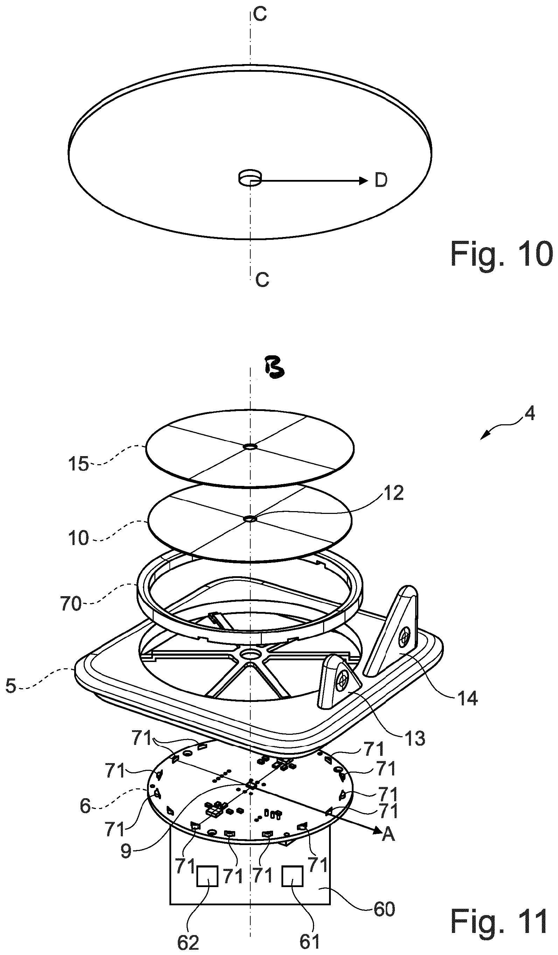

An der Oberseite des Spielzeugs 1 ist eine Kopfplatte 4 in eine Ausnehmung des Mantels 3 eingesetzt. Ein möglicher Aufbau einer Kopfplatte 4 ist in der Explosionsdarstellung der Fig. 11 darstellt. Die Kopfplatte 4 weist einen Rahmen 5 auf. Unterhalb des Rahmens 5 ist eine zweite Platine 6 in Form eines "Printed Circuit Board" (PCB) vorgesehen. Eine erste Platine 60 ist unterhalb der zweiten Platine 6 und in einem Winkel von 90° zur zweiten Platine 6 angeordnet. Auf der ersten Platine 60 ist die Auswerteeinheit 61 eines ersten Sensors angeordnet, wobei der erste Sensor innerhalb eines Bereichs seiner Umgebung eine Eigenschaft oder eine Änderung einer Eigenschaft dieser Umgebung feststellen kann, wobei der erste Sensor ein Lesegerät zum Kommunizieren mit einem passiven RFID-Transponder und/oder zum Kommunizieren mit einem aktiven RFID-Transponder ist. Der erste Sensor weist eine nicht näher dargestellte Antenne und die Auswerteeinheit auf. Die Antenne kann ringförmig ausgeführt sind und in dem Rahmen 5 so eingebettet sein, dass die Antenne umlaufend um die Auflage 8, insbesondere umlaufend um die Mulde 16 ausgeführt ist. Auf der Platine 60 ist ferner eine Kontrolleinheit 62 vorgesehen, die den Lautsprecher 2 zur Wiedergabe von Musik oder einer gesprochenen Geschichten ansteuern kann, wenn der erste Sensor innerhalb des Bereichs seiner Umgebung eine bestimmte Eigenschaft oder eine bestimmte Änderung einer Eigenschaft dieser Umgebung feststellt oder wenn die Kontrolleinheit 62 eine bestimmte Änderung der von dem ersten Sensor festgestellten Eigenschaft feststellt.

Die Kontrolleinheit 62 kann als Prozessor einen TI CC3200 Mikrocontroller mit 80MHz und 256kB RAM aufweisen sowie einen Flashspeicher ISSI IS25LQ032B 4MB und einen Speicher SanDisk Edge 8GB sowie einen DAC/Verstärker: TI TLV320DAC3100 und einen Beschleunigungssensor NXP MMA8451Q.

Auf der Platine 6 ist ein zweiter Sensor 9 vorgesehen, der die Richtung eines auf den zweiten Sensor wirkenden Magnetfelds relativ zu einer Vorzugsrichtung A bestimmen kann. Die Vorzugsrichtung A bei den hier dargestellten Ausführungsformen verläuft parallel zur Grundfläche 7 einer in der Kopfplatte 4 vorgesehenen Auflage 8. Die Vorzugsrichtung A verläuft senkrecht und mithin radial zu einer Rotationsachse B. Der zweite Sensor 9 in der hier gezeigten Ausführungsform ist ein Hall-Sensor. Die Vorzugsrichtung A ist ein sich aus dem Aufbau des Hall-Sensors ergebendes Merkmal. Die Lage der Vorzugsrichtung A relativ zur Platine 6 hängt davon ab, mit welcher Ausrichtung der Hall-Sensor auf die Platine 6 aufgebracht wird. Die Lage der Vorzugsrichtung A relativ zu weiteren Bauteilen der Kopfplatte 4, bspw. relativ zum Rahmen 5 oder beispielsweise relativ zu an dem Rahmen 5 vorgesehenen Bedienelementen 13, 14 hängt von der Ausrichtung ab, mit der die Platine 6 im Rahmen 5 verbaut wird. In der in Fig. 11 dargestellten Bauform ist der Hall-Sensor so auf der Platine 6 angebracht und die Platine 6 so im Rahmen 5 angebracht, dass die Vorzugsrichtung A unterhalb der beiden Bedienelemente 13, 14, zwischen diesen beiden verläuft.

Der zweite Sensor 9 ist mittig auf der kreisscheibenförmigen Platine 6 angeordnet. Die Rotationsachse B verläuft durch den zweiten Sensor B und schneidet die kreisscheibenförmige Platine 6 in deren Mittelpunkt.

Die Kopfplatte 4 enthält ferner den Lichtleiterring 71 eines LED-Ring. Dieser weist einzeln ansteuerbaren LEDs 70 auf. Die einzelnen LEDs 70 sind ferner so einzeln ansteuerbar, dass die Farbe des von der jeweiligen LED 70 abgegebenen Lichts einzeln ansteuerbar ist. Die LEDs 70 des LED-Rings können von der Kontrolleinheit 62 auf der Platine 6 angesteuert werden. Die LED 70 sind auf der Platine 6 und unterhalb des Lichtleiterrings 71 angeordnet und strahlen das von ihnen erzeugte Licht in den Lichtleiterring 71 ein, der dieses Licht von den LED 70 unterhalb der Auflage 8 in den Bereich der Auflage 8 transportiert, so dass es in der Draufsicht auf die Kopfplatte 8 sichtbar ist.

Die Kopfplatte 4 weist ferner eine kreisscheibenförmige Metallplatte 10 auf. In der Mitte der Metallplatte 10 ist ein Loch 12 vorgesehen. Die relative Anordnung der Metallplatte 12 zum zweiten Sensor 9 ist so gewählt, dass der zweite Sensor 9 unterhalb des Lochs 12 angeordnet ist. Dadurch kann ein durch eine oberhalb der Metallplatte 10 angeordnete Disk 20 erzeugtes Magnetfeld besser durch den zweiten Sensor 9 wahrgenommen werden. In einer alternativen Ausführungsform ist der zweite Sensor 9 nicht unterhalb des Lochs 12 der Metallplatte 10 angeordnet, sondern in dem Loch 12 der Metallplatte 10. Die relative Lage der Metallplatte 10 zum zweiten Sensor 9 kann durch die Anbringung der Metallplatte 10 am Rahmen 5 und durch die Anbringung des zweiten Sensors 2 an der Platine 6 und durch die Anbringung der Platine 6 am Rahmen 5 eingestellt werden.

Die Kopfplatte 4 weist ferner einen oben auf die Metallplatte 10 aufgeklebten Sticker 15 auf.

Die Bedienelemente 13, 14 sind mit der Kontrolleinheit auf der Platine 6 verbunden und können Steuerbefehle erzeugen, die von der Kontrolleinheit auf der Platine 6 umgesetzt werden. Beispielsweise kann durch die Bedienelemente 13, 14 die Lautstärke der Wiedergabe der Musik, bzw. der gesprochenen Geschichte eingestellt werden.

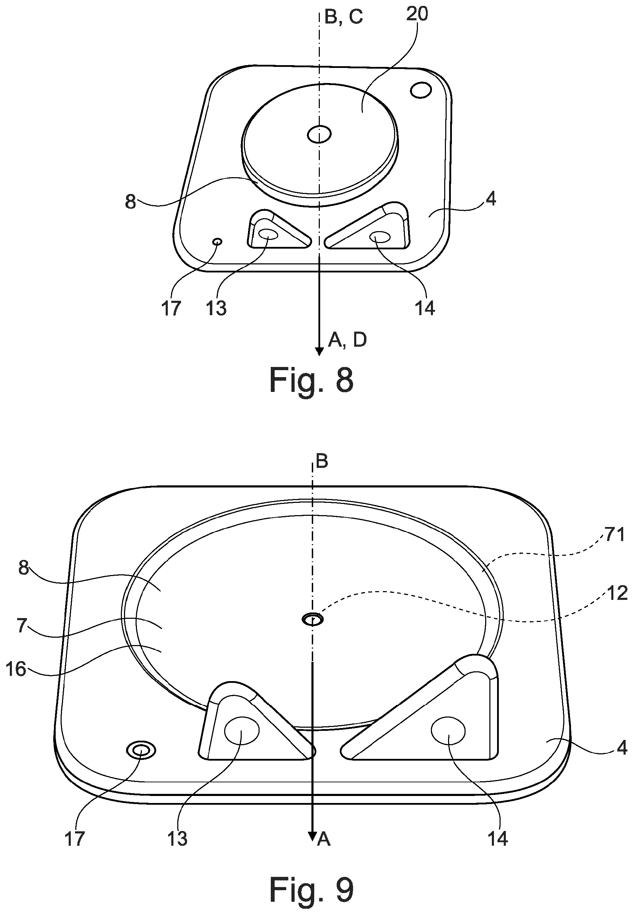

Das Spielzeug 1 weist eine Auflage 8 auf. Diese Auflage 8 kann Teil einer in der Kopfplatte 4 ausgearbeiteten Mulde 16 sein. Beispielsweise wird die Auflage 8 durch die Grundfläche 7 der Mulde 16 gebildet (vgl. beispielsweise Fig. 9). Das Vorsehen einer Mulde 16 erleichtert das Positionieren der Disk 20 auf der Auflage 8, insbesondere wenn der Durchmesser der Mulde 16 nur ein geringes Übermaß zum Durchmesser der Disk 20 hat.

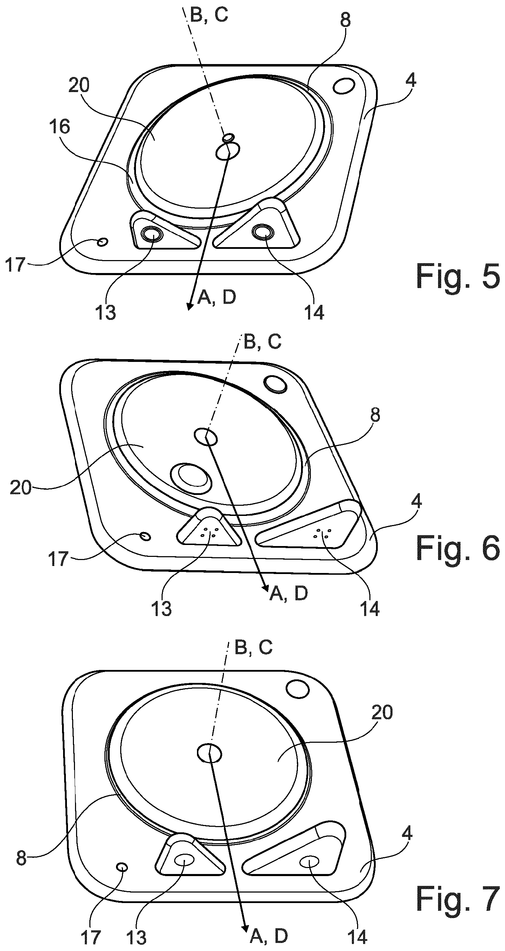

Wie die Fig. 5 bis 8 jedoch zeigen, sind auch andere Ausgestaltungen der Auflage 8 und der Disk 20 möglich. Die Fig. 1, 2, 5 bis 8 und 12 zeigen die Disk 20 in einer Anordnung auf der Auflage 8, bei der eine magnetische Achse D des Magneten in Flucht mit der Vorzugsrichtung A ist. Durch Drehen der Disk 20 um die Rotationsachsen C kann die Relativlage der magnetischen Achse D relativ zur Vorzugsrichtung A geändert werden. Der als Hall-Sensor ausgeführte zweite Sensor 9 kann die Lage der magnetischen Achse D relativ zur Vorzugsachse A bestimmen.

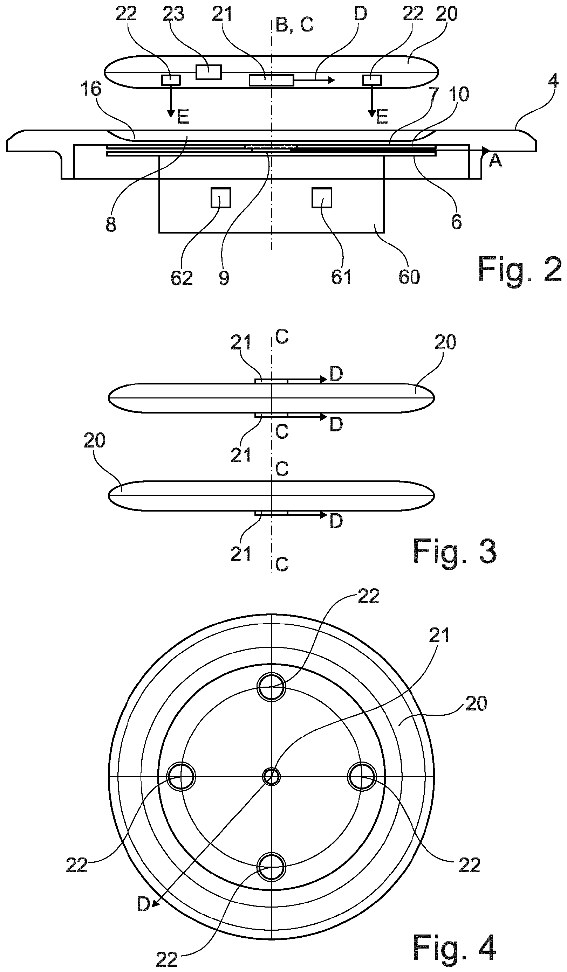

Das Spielzeug 1 kann Teil eines Systems sein, das neben dem Spielzeug 1 auch eine Disk 20 aufweist. Die Disk 20 weist eine Rotationsachse C und einen radial magnetisierten Magneten 21 auf, bei dem die magnetische Achse D des Magneten 21 senkrecht zur Rotationsachse C steht (vgl. bspw. Fig. 3, 4, 10).

Die Disk 20 weist zusätzlich zu dem radial magnetisierten Magneten 21 noch vier weiter, aber axial magnetisierten Magneten 22 auf, deren jeweilige magnetische Achse E durch parallel zur Rotationsachse C der Disk 20 verläuft. Durch die Magnetwirkung der Magneten 22 kann die Disk 20 an der Metallplatte 10 gehalten werden.

In der Kopfplatte 4 ist ein Kopfhöreranschluss 17 vorgesehen.

In der Disk 20 ist ein passiver RFID-Transponder 23 vorgesehen, der von dem ersten Sensor ausgelesen werden kann.

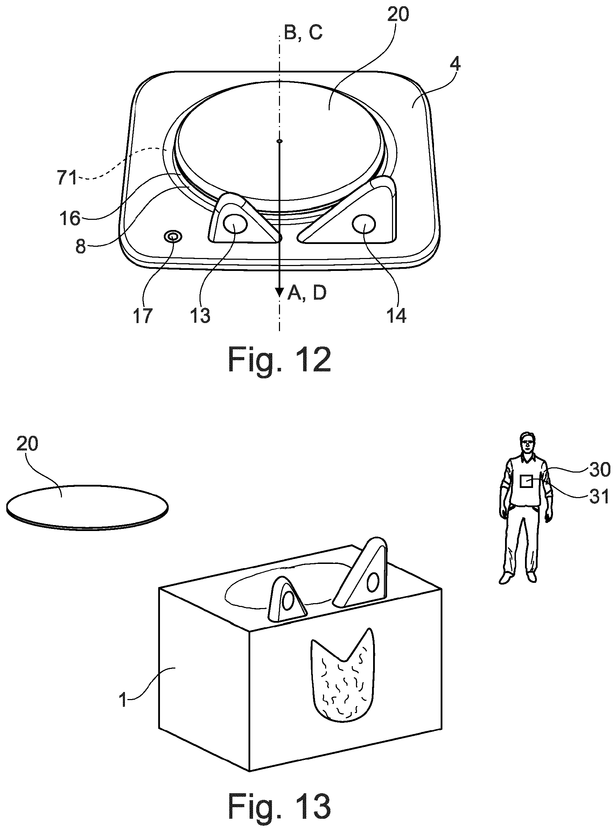

Fig. 13 zeigt, dass das in Fig. 1 dargestellte System aus Spielzeug 1 und Disk 20 um einen Kennungsträger 30 in Form einer Spielfigur erweitert werden kann. In dem Kennungsträger 30 ist ein passiver RFID-Transponder vorgesehen, der von dem ersten Sensor ausgelesen werden kann.

Das erfindungsgemäße System kann beispielsweise so betrieben werden, dass eine erste Disk 20 mit einem ersten RFID-Transponder 23 auf die Auflage 8 gelegt wird. Der erste Sensor erkennt den RFID-Transponder 23 und sendet ein entsprechendes Signal an die Kontrolleinheit 61. Die Kontrolleinheit 61 ruft daraufhin eine in ihr oder einem Speicher abgelegte Programmroutine auf. Als Teil der Programmroutine wird der Lautsprecher 2 zur Wiedergabe eines Satzes angesteuert und beispielsweise eine LED 70 des LED-Rings mit einer bestimmten Farbe angesteuert. Beispielsweise kann die LED mit der Farbe rot angesteuert werden und der Lautsprecher zur Ausgabe der Geschichte "Drehe die Disk zum roten Licht" angesteuert werden. Dreht der Bediener die Disk nun so, dass die Richtung des auf den zweiten Sensor 9 wirkenden Magnetfelds des radial magnetisierten Magneten 21 eine vorbestimmte Lage relativ zu einer Vorzugsrichtung A einnimmt (was von dem zweiten Sensor 9 erkannt wird), so kann die Kontrolleinheit 61 den Lautsprecher 2 auf Grundlage eines entsprechenden Signals des zweiten Sensor 9 zur Wiedergabe der Geschichte: "Das ist richtig, jetzt hast Du die Disk richtig ausgerichtet" ansteuern.

Beim Einsatz einer anderen Disk mit einem anderen RFID-Transponder kann der Bediener aufgefordert werden, die Disk möglichst schnell zu drehen, wobei mittels des zweiten Sensors festgestellt wird, wie oft das Magnetfeld des radial magnetisierten Magneten 21 innerhalb einer vorbestimmten Zeiteinheit die Vorzugsrichtung A einnimmt.

Beim Einsatz einer anderen Disk mit einem anderen RFID-Transponder kann der Bediener aufgefordert werden, die Disk in eine bestimmte Abfolge von Relativlagen zu bringen, beispielsweise nach Art eines Öffnens eines Tresors.

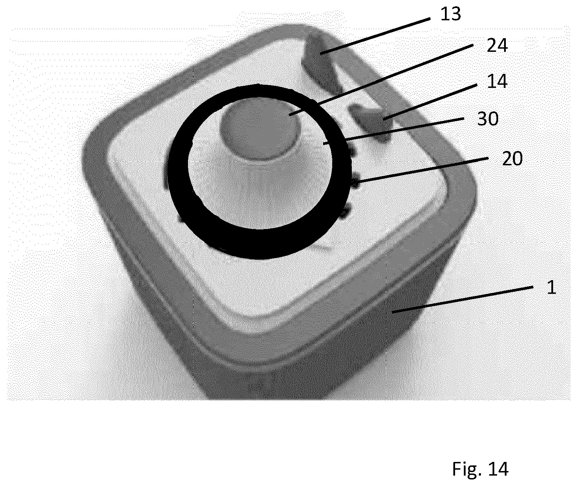

Fig. 14 zeigt eine schematische Ansicht eines erfindungsgemäßen Systems mit einem Spielzeug 1, einen Magnetträger 20 in Form einer Disk 20 und einem Kennungsträger 30. Die Disk 20 und der Kennungsträger 30 sind zusammen auf das Spielzeug 1 aufgelegt. Mittels des Kennungsträgers 30 wird ein Programm gestartet, wobei mittels der Disk 20 das Programm gesteuert wird. Die Disk 20 weist ebenfalls einen RFID-Transponder 23 auf. Die Disk 20 und der Kennungsträger 30 sind dabei so ausgebildet, dass der Kennungsträger 30 die Disk 20 umgibt.

Zudem weist der Magnetträger 20 in Form einer Disk 20 ein Betätigungselement 24 auf. Es ist ebenfalls denkbar, dass der Kennungsträger 30 ein Betätigungselement 24 aufweist. Das Betätigungselement 24 ist eine Taste. Der RFID-Transponder 23 ist mit dem Betätigungselement 24 verbunden, wobei das Betätigungselement 24 so ausgebildet ist, dass das Betätigungselement 24 die Kommunikation des RFID-Transponders 23 mit dem ersten Sensor beeinflusst. In dem in Fig. 14 gezeigten Ausführungsbeispiel wird die Kommunikation zwischen dem RFID-Transponder 23 und dem ersten Sensor durch das Drücken des Betätigungselements 24 beeinflusst.

## Patentansprüche

1. Spielzeug (1) zur Wiedergabe von Musik oder einer gesprochenen Geschichten
▪ mit einem Lautsprecher (2) und/oder einem Lautsprecheranschluss,
▪ einem ersten Sensor, der innerhalb eines Bereichs seiner Umgebung eine Eigenschaft oder eine Änderung einer Eigenschaft dieser Umgebung feststellen kann, wobei der erste Sensor ein Lesegerät zum Kommunizieren mit einem passiven RFID-Transponders (31) und/oder zum Kommunizieren mit einem aktiven RFID-Transponder ist, und
▪ einer Kontrolleinheit (62), die den Lautsprecher (2) oder den Lautsprecheranschluss zur Wiedergabe von Musik oder einer gesprochenen Geschichten ansteuern kann, wenn der erste Sensor innerhalb des Bereichs seiner Umgebung eine bestimmte Eigenschaft oder eine bestimmte Änderung einer Eigenschaft dieser Umgebung feststellt oder wenn die Kontrolleinheit (62) eine bestimmte Änderung der von dem ersten Sensor festgestellten Eigenschaft feststellt,
**gekennzeichnet durch** einen zweiten Sensor (9), der die Richtung eines auf den zweiten Sensor (9) wirkenden Magnetfelds relativ zu einer Vorzugsrichtung (A) bestimmen kann.

2. Spielzeug nach Anspruch 1, **dadurch gekennzeichnet, dass** der zweite Sensor (9) ein Hall-Sensor ist.

3. Spielzeug nach Anspruch 1 oder 2, **gekennzeichnet durch** eine Auflage (8), wobei der zweite Sensor (9) unterhalb der Auflage (8) angeordnet ist.

4. Spielzeug nach Anspruch 3, **dadurch gekennzeichnet, dass** die Auflage (8) Teil einer Mulde (16) ist.

5. Spielzeug nach Anspruch 3 oder 4, **dadurch gekennzeichnet, dass** die Auflage (8) eine Ausnehmung oder Delle aufweist und der zweite Sensor (9) in Flucht zu der Ausnehmung oder Delle unterhalb der Auflage (8) angeordnet ist.

6. Spielzeug nach einem der Ansprüche 3 bis 5, **dadurch gekennzeichnet, dass** unterhalb der Auflage (8) eine Metallplatte (10) angeordnet ist.

7. Spielzeug nach einem der Ansprüche 3 bis 5, **dadurch gekennzeichnet, dass** die Auflage (8) durch einen LED-Ring umschlossen wird.

8. Spielzeug nach einem der Ansprüche 1 bis 7, **gekennzeichnet durch** eine Platine (6), wobei der erste Sensor und der zweite Sensor (9) und die Kontrolleinheit auf der Platine (6) angeordnet sind.

9. System aus einem Spielzeug nach einem der Ansprüche 1 bis 8 und einem Magnetträger, insbesondere einer Disk (20), wobei der Magnetträger eine Rotationsachse (C) aufweist, um die er rotieren kann, und einen radial magnetisierten Magneten (21) aufweist, bei dem die magnetische Achse (D) des Magneten (21) senkrecht zur Rotationsachse (C) steht.

10. System nach Anspruch 9, **dadurch gekennzeichnet, dass** der Magnetträger, insbesondere die Disk (20) zusätzlich zu dem radial magnetisierten Magneten (21) mindestens noch einen axial magnetisierten Magneten (22) aufweist, dessen magnetische Achse (E) durch die Rotationsachse oder parallel zur Rotationsachse (C) verläuft.

11. System nach einem der Ansprüche 9 oder 10, **dadurch gekennzeichnet, dass** der Magnetträger, insbesondere die Disk (20) einen passiven RFID-Transponder (23) oder aktiven RFID-Transponder aufweist.

12. System nach einem der Ansprüche 9 bis 11, **gekennzeichnet durch** einen zusätzlich zum Magnetträger, insbesondere zusätzlich zu der Disk (20) vorgesehenen Kennungsträger (30), der eine Eigenschaft hat, die der erste Sensor feststellen kann, nämlich einen passiven RFID-Transponder (31) oder aktiven RFID-Transponder aufweist.

13. Verfahren zum Betreiben eines Systems nach einem der Ansprüche 9 bis 12, **dadurch gekennzeichnet, dass**
• der zweite Sensor (9) die Richtung eines auf den zweiten Sensor (9) wirkenden, von dem radial magnetisierten Magneten (21) erzeugten Magnetfelds relativ zu einer Vorzugsrichtung (A) bestimmt und
• die Kontrolleinheit (62) auf Grundlage der von dem zweiten Sensor (9) bestimmten Richtung des auf den zweiten Sensor (9) wirkenden, von dem radial magnetisierten Magneten (21) erzeugten Magnetfelds relativ zu einer Vorzugsrichtung (A) den Lautsprecher (2) oder den Lautsprecheranschluss zur Wiedergabe von Musik oder einer gesprochenen Geschichten ansteuert.

14. Verfahren nach Anspruch 13, **dadurch gekennzeichnet, dass** die Auflage (8) des Spielzeugs durch einen eine LED (70) aufweisenden LED-Ring umschlossen wird und die Kontrolleinheit (62) auf Grundlage der von dem zweiten Sensor (9) bestimmten Richtung des auf den zweiten Sensor (9) wirkenden, von dem radial magnetisierten Magneten (21) erzeugten Magnetfelds relativ zu einer Vorzugsrichtung (A) eine LED (70) des LED-Rings ansteuert.

15. Verwendung eines Magnetträgers, insbesondere einer Disk (20), wobei der Magnetträger eine Rotationsachse (C) aufweist, um die er rotieren kann, und einen radial magnetisierten Magneten (21) aufweist, bei dem die magnetische Achse (D) des Magneten (21) senkrecht zur Rotationsachse (C) steht, zur Bildung eines Systems nach einem der Ansprüche 9 bis 12 oder zur Durchführung eines Verfahrens nach einem der Ansprüche 13 oder 14.
